# EUROPÄISCHE PATENTSCHRIFT

(11) **EP 4 299 242 B1**
(45) Veröffentlichungstag und Bekanntmachung des Hinweises auf die Patenterteilung: **17.12.2025**
(21) Anmeldenummer: 23181851.9
(22) Anmeldetag: 27.06.2023
(51) Int. Cl.: B23Q 3/06, B23C 3/18

(54) **SPANNVORRICHTUNG, WERKZEUGMASCHINE, FERTIGUNGSANLAGE UND VERFAHREN ZUR HERSTELLUNG EINES WERKSTÜCKS**
CLAMPING DEVICE, MACHINE TOOL, PRODUCTION SYSTEM AND METHOD FOR PRODUCING A WORKPIECE
DISPOSITIF DE SERRAGE, MACHINE-OUTIL, INSTALLATION DE FABRICATION ET PROCÉDÉ DE FABRICATION D'UNE PIÈCE À USINER

(30) Priorität: 28.06.2022 DE 102022116108
(43) Veröffentlichungstag der Anmeldung: 03.01.2024
(73) Patentinhaber: CHIRON Group SE, 78532 Tuttlingen (DE)
(72) Erfinder: Kossmann, Oliver, 78532 Tuttlingen (DE); King, Egon, 78604 Rietheim-Weilheim (DE)
(74) Vertreter: Witte, Weller & Partner Patentanwälte mbB

(56) Entgegenhaltungen:
- WO-A2-2009/106268
- CN-B- 111 113 092
- US-A1- 2010 126 015
- US-A1- 2015 367 468

## Beschreibung

Die vorliegende Offenbarung betrifft eine Spannvorrichtung zur Aufnahme eines spanend zu bearbeitenden Werkstücks, eine Kombination aus einer solchen Spannvorrichtung und einem Werkstück, eine mit einer solchen Spannvorrichtung versehene Werkzeugmaschine, eine Fertigungsanlage mit zumindest einer Werkzeugmaschine sowie ein Verfahren zur Herstellung eines Werkstücks, insbesondere mittels Spanen. In beispielhaften Ausgestaltungen bezieht sich die vorliegende Offenbarung auf die spanende Fertigung und Bearbeitung von Impellern, Verdichterrädern, Rotoren, Turbinenrädern, Flügelrädern und dergleichen.

Aus der WO 2009/106268 A2 ist eine Werkzeugmaschine zur spanenden Bearbeitung eines eine zentrische Bohrung aufweisenden Werkstücks bekannt, mit einem Werkzeughalter zum Halten eines Werkzeugs, einer Werkstückauflage zum Auflegen des Werkstücks, einer Werkstückhalterung zum Festhalten des Werkstücks, und einem Antriebsmittel zum Drehen des Werkstücks um eine zentrische Drehachse, wobei die Werkstückauflage einen Dorn zum formschlüssigen Aufstecken des Werkstücks aufweist, so dass ein Abschnitt des Dorns auf einer ersten Seite des Werkstücks in die Bohrung hineinragt, und wobei die Werkstückhalterung einen in Richtung der Bohrungsachse der zentrischen Bohrung bewegbaren Gegenhalter zum Beaufschlagen des Werkstücks mit einem in Richtung der Bohrungsachse wirkenden Anpressdruck auf einer der ersten Seite gegenüberliegenden zweiten Seite aufweist.

Die Werkzeugmaschine eignet sich zur Fertigung von Werkstücken mit komplexen Geometrien, beispielsweise zur Fertigung von Impellern, Verdichterrädern, Turbinenrädern, Propellern und dgl. Solche Werkstücke werden beispielsweise bei Strömungsmaschinen genutzt. Üblicherweise weisen die Werkstücke eine Rotationsachse und eine Mehrzahl von Schaufeln auf, die um die Rotationsachse verteilt sind. Die Schaufeln können auch als Blätter oder Flügel bezeichnet werden. Derartige Werkstücke weisen komplexe Geometrien mit Krümmungen in mehreren Achsen auf. Die WO 2009/106268 A2 eignet sich zur Bearbeitung einer Seite des Werkstücks, um dort komplexe Schaufelgeometrien zu formen.

In beispielhaften Ausgestaltungen bezieht sich die vorliegende Offenbarung auf solche Werkstücke, bei denen eine integrale Gestaltung aus Nabe und Schaufeln vorliegt. Beispielsweise ist ein einstückiger Körper vorgesehen, der durch Spanen aus einem kompakten Halbzeug erzeugt wird. In beispielhaften Ausgestaltungen bezieht sich die vorliegende Offenbarung auf aus dem Vollen gefräste Werkstücke.

Aus der WO 2004/012899 A2 ist eine Vorrichtung zum Einspannen rotationssymmetrischer Werkstücke bekannt, die sich zur Bearbeitung der Rückseite eines bereits auf der gegenüberliegenden Seite bearbeiteten Werkstücks eignet. Die Vorrichtung umfasst einen Zuganker, der in eine Nabe des Werkstücks einfährt und dort hinter einer hinterschnittigen Kontur einrückt. Die Gestaltung ähnelt einem Bajonett-Verschluss. Auf diese Weise kann das Werkstück axial eingespannt werden. Die WO 2004/012899 A2 befasst sich jedoch nicht mit der hochgenauen Drehausrichtung zwischen Vorderseite und Rückseite des Werkstücks. Es wird lediglich vorgeschlagen, eine eingegossene Markierung bei der Nabe des Werkstücks zu verwenden. Dieser Ansatz eignet sich nicht für Werkstücke, bei denen außen die Außenkontur der Nabe spanend erzeugt wird.

Aus der US 2010/126015 A1 ist eine Vorrichtung zum Ausrichten/Fixieren eines Impellers zu Reparaturzwecken bekannt, die eine verzahnte Scheibe nutzt.

Es hat sich gezeigt, dass zunehmend auch einschlägige Werkstücke gewünscht sind, bei denen sowohl eine erste Seite (beispielsweise Vorderseite) als auch eine zweite Seite (beispielsweise Rückseite) zu bearbeiten sind. Die Begriffe erste Seite/Vorderseite und zweite Seite/Rückseite beziehen sich in erster Linie auf die Reihenfolge bei der Bearbeitung. Die Begriffe erste Seite/Vorderseite und zweite Seite/Rückseite dienen erster Linie zur Unterscheidung der beiden Seiten und sind nicht einschränkend zu verstehen.

Zwischen den beiden Seiten ist regelmäßig eine durchgehende kreisförmige oder ringförmige Wand vorgesehen. Ausgehend von dieser Wand können an der Vorderseite und an der Rückseite Schaufeln und ähnliche Konturen ausgebildet sein. Eine Bearbeitung erfolgt an beiden Seiten, beispielsweise angrenzend an eine vordere Stirn und eine hintere Stirn einer Nabe des Werkstücks.

Beispielsweise lässt sich mit der aus der WO 2009/106268 A2 bekannten Anordnung eine erste Seite (Vorderseite) eines Werkstücks in Form eines Verdichterrades oder Impellers umfangreich bearbeiten. Da jedoch das Werkstück mit seiner zweiten Seite (Rückseite) auf einer Spannvorrichtung fixiert ist, ist diese Seite gegebenenfalls nicht ohne weiteres für die Bearbeitung zugänglich.

Die Bearbeitung der zweiten Seite erfordert gegebenenfalls ein Umspannen des Werkstücks. Regelmäßig gibt es Vorgaben für die Drehausrichtung (Drehorientierung) zwischen der ersten Seite und der zweiten Seite. Mit anderen Worten sollten beispielsweise Schaufeln auf der zweiten Seite in bestimmter Weise zu Schaufeln auf der ersten Seite ausgerichtet sein. Diese Zuordnung muss gegebenenfalls hochgenau erfolgen. Es kann daher für derartige Werkstücke spezifische Vorgaben für die Drehorientierung (Winkelausrichtung) zwischen erster Seite und zweiter Seite geben, die bei der Fertigung zu beachten sind.

Beispielsweise beim Umspannen des Werkstücks zwischen der ersten Seite und der zweiten Seite kann die Drehorientierung verloren gehen. Die Drehorientierung des Werkstücks kann grundsätzlich mittels geeigneter Messtechnik erfasst werden. Dies erhöht jedoch den Fertigungsaufwand (Rüstaufwand).

Vor diesem Hintergrund liegt der vorliegenden Offenbarung die Aufgabe zugrunde, eine Spannvorrichtung zur Aufnahme eines spanend zu bearbeitenden Werkstücks, eine mit einer solchen Spannvorrichtung versehene Werkzeugmaschine, eine Fertigungsanlage mit zumindest einer Werkzeugmaschine sowie ein Verfahren zur Herstellung eines Werkstücks, insbesondere mittels Spanen, anzugeben, die eine hochgenaue Platzierung und Orientierung des Werkstücks erlauben. Vorzugsweise wird eine hochgenaue und präzise Platzierung und Drehausrichtung mit hoher Wiederholgenauigkeit gewährleistet. Insbesondere soll die Spannvorrichtung eine Optimierung der Taktzeiten in der Serienfertigung erlauben. Vorzugsweise soll die Spannvorrichtung die mehrseitige oder allseitige Bearbeitung von Impellern, Verdichterrädern und ähnlichen Werkstücken unterstützen. Die Spannvorrichtung soll vorzugsweise eine hochgenaue Drehausrichtung eines Werkstücks über dessen zuvor bereits bearbeitete Vorderseite ermöglichen, damit die Rückseite in genauer Drehausrichtung in Bezug auf die Vorderseite bearbeitet werden kann.

Gemäß einem ersten Aspekt bezieht sich die vorliegende Offenbarung auf eine Spannvorrichtung zur Aufnahme eines spanend zu bearbeitenden Werkstücks, insbesondere zur Bearbeitung eines beidseitig zu bearbeitenden Impellers, die Folgendes aufweist:
- einen rotatorisch um eine Längsachse antreibbaren Werkstückhalter mit einer Werkstückauflage,
- einen Niederhalter, der zumindest in einer Spannstellung der Werkstückauflage gegenüberliegt, um ein mit einer Zentrierausnehmung versehenes Werkstück konzentrisch zur Längsachse zwischen der Werkstückauflage und dem Niederhalter einzuspannen, und
- eine Drehorientierungskontur, die bei der Werkstückauflage angeordnet ist und zumindest einen Drehanschlag für einen Orientierungsabschnitt des Werkstücks zur Drehausrichtung des Werkstücks in der Spannstellung bereitstellt, wobei die Drehorientierungskontur eine die Längsachse umgebende Krone umfasst, und wobei der zumindest eine Drehanschlag bei einem Zahn der Krone ausgebildet ist.

Die Spannvorrichtung erlaubt nicht nur eine axiale Fixierung, sondern auch eine definierte Drehorientierung des Werkstücks. Auf diese Weise können Werkstücke einer Serie wiederholgenau positioniert werden. Dies erhöht insgesamt die Fertigungsqualität. Im gespannten Zustand (Spannstellung) des Werkstücks kann eine dem Niederhalter zugewandte Seite (zweite Seite/Rückseite) bearbeitet werden, beispielhaft handelt sich bei dieser Seite (zweite Seite/Rückseite) um eine Seite, die in einem vorhergehenden Fertigungsschritt einer Werkstückauflage einer Spannvorrichtung zugewandt war. Mit anderen Worten wird also das Werkstück beispielsweise um 180° um eine zu dessen Längsachse senkrechte Achse verschwenkt.

In einer beispielhaften Ausgestaltung ist der Orientierungsabschnitt des Werkstücks von der Nabe des Werkstücks (radial) beabstandet. In einer beispielhaften Ausgestaltung dient eine zuvor bearbeitete Kontur als Orientierungsabschnitt. Dies kann bei einer Bearbeitung einer zweiten Seite des Werkstücks eine zuvor bei der Bearbeitung der ersten Seite des Werkstücks erzeugte Kontur sein.

Das Werkstück ist beispielhaft als Impeller, Verdichterrad, Rotor, Lüfterrad, Schaufelrad oder dergleichen gestaltet. In einer beispielhaften Ausgestaltung ist das Werkstück im finalen Zustand sowohl an einer ersten Seite wie auch an einer zweiten Seite mit einer Schaufelkontur versehen. Die offenbarungsgemäße Spannvorrichtung erleichtert die Bearbeitung der zweiten Seite, die während der Bearbeitung der ersten Seite gegebenenfalls nur schwer zugänglich ist. Demgemäß kann die offenbarungsgemäße Spannvorrichtung als sekundäre Spannvorrichtung oder als Spannvorrichtung für die zweite Seite bezeichnet werden, dies ist jedoch nicht einschränkend zu verstehen.

Die Drehorientierungskontur weist zumindest einen Anschlag für einen entsprechenden Orientierungsabschnitt des Werkstücks auf. Auf diese Weise können Werkstücke wiederholgenau mit der gewünschten Drehorientierung gespannt werden. Die Zentrierausnehmung des Werkstücks ist insbesondere konzentrisch zur Längsachse des Werkstückhalters ausgerichtet.

Die Spannvorrichtung bietet sich beispielsweise für solche Werkstücke an, bei denen eine Fertigung in einer Aufspannung wirtschaftlich nicht vertretbar ist. Die Spannvorrichtung berücksichtigt die gewünschte Zentrierung (sehr genaue Konzentrizität) bei der Bearbeitung der ersten Seite und der zweiten Seite. Ferner bietet sich die Verwendung bei komplexen Geometrien an, die nicht ohne weiteres von Spannelementen kontaktiert werden können.

Der Orientierungsabschnitt des Werkstücks wird beispielsweise in einem vorgelagerten Fertigungsschritt, insbesondere in einer anderen Aufspannung, erzeugt. In einer beispielhaften Ausgestaltung weist der Orientierungsabschnitt eine zumindest teilweise radiale Erstreckung auf. Beispielsweise ist der Orientierungsabschnitt in zwei oder drei Richtungen gekrümmt. Der Orientierungsabschnitt des Werkstücks kontaktiert den Drehanschlag. Insbesondere geht es hier um die Drehausrichtung des Werkstücks. Das eigentliche Spannen und die Momentübertragung zur Drehmitnahme bei der Bearbeitung können über andere Gestaltelemente des Werkstücks (beispielsweise Nabe) erfolgen.

Die Offenbarung bezieht sich ferner auch auf eine Kombination einer Spannvorrichtung gemäß einer der hierin beschriebenen Ausgestaltungen und eines insbesondere zu Bearbeitungszwecken daran/darin aufgenommenen Werkstücks, insbesondere in Form eines beidseitig zu bearbeitenden Impellers. Die Kombination umfasst die Spannvorrichtung und das Werkstück.

Gemäß einer beispielhaften Ausgestaltung weist die Drehorientierungskontur eine Mehrzahl von Drehanschlägen auf, die um die Längsachse verteilt sind. Demgemäß weist das Werkstück eine Mehrzahl von Orientierungsabschnitten auf. Eine Abstützung über eine Mehrzahl von um die Längsachse herum verteilten Orientierungsabschnitten (beispielsweise an Schaufeln des Werkstücks ausgebildet) verbessert die Ausrichtung und die Fähigkeit zur Kraftübertragung.

Gemäß einer weiteren beispielhaften Ausgestaltung ist der zumindest eine Drehanschlag zur Drehausrichtung des Werkstücks an eine Schaufel des Werkstücks angepasst. Mit anderen Worten befindet sich der Orientierungsabschnitt des Werkstücks beispielsweise auf einer zuvor in einer anderen Aufspannung erzeugten Schaufel der ersten Seite, die nun der Werkstückauflage zugewandt ist.

Gemäß einer weiteren beispielhaften Ausgestaltung ist der zumindest eine Drehanschlag an eine Kante der Schaufel angepasst. Die Kante ist beispielsweise der Rand einer Schaufel mit zumindest teilweise radialer Erstreckung und zumindest teilweise axialer Erstreckung. Die Kante ist beispielsweise eine vergleichsweise schmale Fläche, die am Drehanschlag zur Anlage kommt. Die Kante ist beispielsweise von einer umlaufenden Wand des Werkstücks beabstandet, die eine erste Seite und eine zweite Seite des Werkstücks voneinander abgrenzt. Aus Sicht der Wand ist die Kante beispielsweise das von der Wand abgewandte Ende einer sich von der Wand aus erstreckenden Schaufel. Die Kante ist beispielsweise eine Kontur an der ersten Seite des Werkstücks, die zur Ausrichtung des Werkstücks bei der Bearbeitung der zweiten Seite dient.

Beispielsweise ist der zumindest eine Orientierungsabschnitt bei einer Schaufel des Werkstücks vorgesehen. Beispielsweise ist bei einer Mehrzahl von oder sämtlichen Schaufeln jeweils ein Orientierungsabschnitt vorgesehen. Beispielsweise ist der zumindest eine Orientierungsabschnitt auf der Werkstückauflage zugewandten ersten Seite ausgebildet, damit die von der Werkstückauflage abgewandte zweite Seite bearbeitet werden kann. In beispielhaften Ausgestaltungen wird eine ohnehin vorhandene Schaufelkontur für den Orientierungsabschnitt genutzt. Mit anderen Worten muss gemäß dieser Ausgestaltung der Orientierungsabschnitt nicht separat erzeugt werden. Vielmehr werden Gestaltmerkmale der Schaufeln berücksichtigt, die eine hochgenaue Drehorientierung in der Spannvorrichtung ermöglichen.

Gemäß einer weiteren beispielhaften Ausgestaltung ist der zumindest eine Drehanschlag an einen in einer anderen Aufspannung erzeugten Orientierungsabschnitt des Werkstücks angepasst, insbesondere an eine Kante einer am Werkstück ausgebildeten Schaufel.

Die Drehorientierungskontur umfasst eine die Längsachse umgebende Krone, wobei der zumindest eine Drehanschlag bei einem Zahn der Krone ausgebildet ist. Mit anderen Worten ist also die Drehorientierungskontur beispielhaft als Krone gestaltet, deren Zähne/Zacken dem Niederhalter zugewandt sind. In einer beispielhaften Ausgestaltung ist die Drehorientierungskontur konzentrisch zur Längsachse orientiert. Die Drehorientierungskontur ist in beispielhaften Ausgestaltungen ähnlich einem Kronenrad gestaltet.

Gemäß einer weiteren beispielhaften Ausgestaltung ist die Krone am Werkstückhalter auswechselbar befestigt. Mit anderen Worten kann die Krone vom Werkstückhalter gelöst werden. Auf diese Weise können verschiedene Typen von Drehorientierungskonturen/Kronen verwendet werden. Dies erlaubt die Anpassung der Spannvorrichtung an verschiedene Werkstücke. Ferner ergibt sich die Möglichkeit zum einfachen Austausch der Krone im Verschleißfall.

Gemäß einer weiteren beispielhaften Ausgestaltung weist die Krone eine Mehrzahl von Zähnen mit Drehanschlägen auf, die um die Längsachse verteilt sind, wobei zwischen zumindest zwei Zähnen eine Lücke für einen Messtaster ausgebildet ist. Gemäß dieser Ausgestaltung kann die Drehlage zumindest eines der Drehanschlägen in Bezug auf die Längsachse erfasst werden. Dies erlaubt eine sogenannte Achskorrektur. Auf diese Weise erfährt die Steuerung einer mit der Spannvorrichtung versehenen Werkzeugmaschine die aktuelle Drehorientierung der Krone und damit eines daran aufgenommenen Werkstücks. Dies kann dazu genutzt werden, um die Drehorientierung der ersten Seite und der zweiten Seite in Übereinstimmung zu bringen. Auf diese Weise kann die zweite Seite hochgenau in Bezug auf die erste Seite bearbeitet werden.

Mit anderen Worten kann also die Drehlage des Werkstücks mittelbar über die Ermittlung der Drehlage der Krone erfasst werden. Auf dieser Basis kann die Drehlage des Werkstücks hergeleitet werden. Es ist jedoch auch möglich, die Drehlage des Werkstücks über ein Werkstück (beispielsweise Referenzteil) zu erfassen, wenn der Messtaster eine definierte Kontur des Werkstücks (beispielsweise Referenzteil) kontaktiert. Nach erfolgter Messung und gegebenenfalls Achskorrektur können Folgeteile bearbeitet werden, ohne dass jedes Mal eine neue Bestimmung der Drehorientierung erfolgen muss.

Gemäß einer weiteren beispielhaften Ausgestaltung ist zumindest einem Zahn der Krone ein Stützsteg benachbart, wobei zwischen dem Drehanschlag des Zahns und dem Stützsteg eine Lücke ausgebildet ist, in die in der Spannstellung eine Schaufel des Werkstücks eingerückt ist, wobei die Schaufel mit einer Kante den Drehanschlag kontaktiert, und wobei der Stützsteg zur Unterstützung der Schaufel an einem von der Kante beabstandeten Stützbereich ausgebildet ist.

Mit anderen Worten kann sich eine Schaufel über den Orientierungsabschnitt (beispielsweise bei einer Kante) sowie den Stützbereich (beabstandet von der Kante) an der Krone abstützen. Der für die Drehorientierung relevante Drehanschlag wird durch den Orientierungsabschnitt kontaktiert. Der Stützbereich ist beispielhaft derart gegenüber der Längsachse geneigt, dass sich bei Anlage des Stützbereichs an der Krone eine Kraftumlenkung ergibt, die den Orientierungsabschnitt des Werkstücks gegen den Drehanschlag drückt. Auf diese Weise kann eine hochgenaue und definierte Ausrichtung gewährleistet werden. Der Stützbereich ist beispielhaft bei einer der Krone zugewandten Schaufelfläche des Werkstücks vorgesehen.

In einer beispielhaften Ausgestaltung sind über den Umfang der Krone mehrere Drehanschläge und Stützstege verteilt. Auf diese Weise kann die Krone in der Spannstellung des Werkstücks eingeleitete Kräfte gut aufnehmen. Das Werkstück kann spielfrei in der Krone aufgenommen sein. Die Anzahl der Drehanschläge und der Stützstege kann identisch sein. Es ist jedoch auch eine abweichende Anzahl vorstellbar, beispielsweise zur Bereitstellung eines genügend breiten Steges für einen Messtaster.

Gemäß einer weiteren beispielhaften Ausgestaltung ist der Stützsteg nachgiebig gestaltet. Beispielsweise kann der Stützsteg im Falle eines axial andrückenden Werkstücks in Richtung auf die Krone und in Richtung auf die Werkstückauflage zumindest teilweise ausweichen. Beispielsweise ist der Stützsteg nachgiebiger als der Drehanschlag gestaltet. Über eine geneigte Orientierung des Stützbereichs wird gewährleistet, dass trotzdem eine Kraftkomponente entsteht, die den Orientierungsabschnitt des Werkstücks in Richtung auf den zumindest einen Drehanschlag drängt. Beispielsweise weist der Stützsteg eine Ausnehmung auf, die die Nachgiebigkeit gewährleistet. Beispielhaft ist der Stützsteg mit einem kleineren Querschnitt (beispielsweise parallel zur Längsachse) als der Drehanschlag gestaltet.

In einer beispielhaften Ausgestaltung weist die Krone einen umlaufenden Grund auf, wobei sich eine Mehrzahl von Drehanschlägen und eine Mehrzahl von Stützstegen ausgehend vom Grund in Richtung auf den Niederhalter erstrecken.

Gemäß einer weiteren beispielhaften Ausgestaltung ist die Drehorientierungskontur aus einem Kunststoffwerkstoff oder aus einem aluminiumbasierten Werkstoff gefertigt. Insbesondere gilt dies für die Krone. Damit wird die Gefahr einer Beschädigung des Werkstücks reduziert.

Gemäß einer weiteren beispielhaften Ausgestaltung trägt der Werkstückhalter einen Zentrierdorn, der in der Spannstellung in die Zentrierausnehmung des Werkstücks hineinragt. Auf diese Weise erfolgt die axiale Zentrierung nicht über die Krone/Drehorientierungskontur, sondern über die zentrale Zentrierausnehmung im Werkstück. Vorzugsweise dient die Zentrierausnehmung des Werkstücks zur Zentrierung in einer ersten Stellung zur Bearbeitung der ersten Seite und einer zweiten Stellung zur Bearbeitung der gegenüberliegenden zweiten Seite.

Gemäß einer beispielhaften Ausgestaltung zentriert der Zentrierdorn das Werkstück in einem Zentrierbereich der Zentrierausnehmung, wobei der Zentrierbereich des Werkstücks in der Spannstellung der Werkstückauflage benachbart ist. Mit anderen Worten liegt gemäß dieser Ausgestaltung der Zentrierbereich in einem Abschnitt von 0 % bis 30 %, vorzugsweise von 0 % bis 25 %, weiter bevorzugt von maximal 20 % der Längserstreckung der Zentrierausnehmung, ausgehend vom Werkstückhalter in Richtung auf den Niederhalter. Auf diese Weise kann das Werkstück zunächst einfach auf einen durchmesserkleineren Einführabschnitt des Zentrierdorns aufgesetzt werden. Erst in einem Endbereich des Zentrierdorns nahe dem Werkstückhalter erfolgt die Zentrierung. Dies vereinfacht eine automatisierte Einspannung. Beispielsweise weist der Zentrierdorn einen Aufnahmekonus auf, der die Ausrichtung und Montage vereinfacht.

Gemäß einer beispielhaften Ausgestaltung weist der Zentrierdorn eine stirnseitige Auflagefläche auf, die insbesondere mit einer reibungserhöhenden Beschichtung versehen ist, insbesondere einer Diamantbeschichtung. Beispielsweise ist die Auflagefläche einer Stirn der Nabe des Werkstücks zugewandt. Im Falle einer reibungserhöhenden Beschichtung kann der Zentrierdorn auch bei verhältnismäßig geringer axialer Anpresskraft hohe Drehmomente übertragen. Vorzugsweise erfolgt die Übertragung des Drehmoments im Wesentlichen durch den Zentrierdorn und allenfalls nur unwesentlich über die Drehorientierungskontur (Krone). Der Zentrierdorn liegt in einem relativ durchmesserkleinen Bereich an einer Stirn des Werkstücks auf. Am Umfang der Stirn ist üblicherweise eine mehr oder weniger komplexe Schaufelkontur ausgebildet, so dass dort eine Abstützung oder Drehmitnahme erschwert ist.

Gemäß einer weiteren beispielhaften Ausgestaltung wirkt der Niederhalter in der Spannstellung axial auf eine Nabe des Werkstücks ein, insbesondere auf eine Stirn der Nabe. Mit anderen Worten drückt der Niederhalter axial auf die vom Werkstückhalter abgewandte Nabe. Der Zentrierdorn drückt auf die dem Werkstückhalter zugewandte Nabe. In einer beispielhaften Ausgestaltung taucht der Niederhalter nicht in die Zentrierausnehmung des Werkstücks ein, zumindest nicht zum Zwecke der Zentrierung. Die Zentrierung erfolgt in dieser Ausgestaltung auf der Seite des Werkstückhalters durch den Zentrierdorn. Der Niederhalter sichert die gegebene Position durch Aufbringung einer im Wesentlichen axial wirksamen Haltekraft.

Gemäß einer weiteren beispielhaften Ausgestaltung ist zumindest ein Strömungskanal für Blasluft in der Drehorientierungskontur ausgebildet, wobei vorzugsweise eine Mehrzahl von Mündungen vorgesehen ist, die in der Spannstellung auf das Werkstück gerichtet sind. Auf diese Weise kann zur Reinigung des Werkstücks direkt auf der zuvor bearbeiteten Seite Blasluft aufgebracht werden. Die Blasluft kann direkt auf Schaufeln des Werkstücks geleitet werden. Mündungen für die Blasluft können beispielsweise zwischen den Drehanschlägen und/oder den Stützstegen angeordnet sein. Im Falle verschiedener unterschiedlicher Werkstücke können verschiedene Drehorientierungskonturen vorgesehen sein. Demgemäß kann auch die Gestaltung des Strömungskanals für Blasluft an das jeweilige Werkstück angepasst sein.

Gemäß einem weiteren Aspekt bezieht sich die vorliegende Offenbarung auf eine Werkzeugmaschine mit einem Gestell, zumindest einem Werkstücktisch zur Aufnahme eines Werkstückhalters, einer Spannvorrichtung gemäß zumindest einer der hierin beschriebenen Ausführungsformen, und mit zumindest einer Werkzeugspindel, die in zumindest vier oder fünf Achsen relativ zur Werkstückauflage der Spannvorrichtung verfahrbar ist. Dies umfasst eine Relativbewegung zwischen der Werkzeugspindel und der Werkstückauflage, bei der die Werkzeugspindel und/oder die Werkstückauflage aktiv bewegt werden können.

Auf diese Weise können hochkomplexe Konturen spanend erzeugt werden. Beispielsweise handelt es sich bei den vier Bewegungsachsen um drei translatorische Achsen (X, Y, Z) sowie um zumindest eine oder zwei Schwenkachsen (beispielsweise A und/oder C). Die Relativbewegung der Werkzeugspindel gegenüber der Werkstückauflage kann zumindest teilweise durch eine Bewegung der Werkstückauflage (relativ zur Werkzeugspindel) erzeugt werden. Die Relativbewegung in vier oder fünf Achsen zwischen der Werkstückauflage und der Werkzeugspindel kann zumindest teilweise durch eine Absolutbewegung der Werkzeugspindel und zumindest teilweise durch eine Absolutbewegung der Werkstückauflage erzeugt werden. Beispielsweise werden translatorische Achsen durch Bewegung der Werkzeugspindel und Schwenkachsen durch Bewegung der Werkstückauflage bereitgestellt.

Gemäß einer weiteren beispielhaften Ausgestaltung weist die Werkzeugmaschine ferner eine Messeinrichtung mit zumindest einem Messtaster auf, der dazu ausgebildet ist, zu Zwecken einer Achskorrektur zumindest eine Drehorientierung der Drehorientierungskontur oder des gespannten Werkstücks zu ermitteln. Beispielsweise geht es hier um die Orientierung des Werkstücks um eine sogenannte C-Achse. Die Achskorrektur umfasst beispielsweise eine rechentechnische Nullpunktbestimmung, die einen hochgenauen Bezug der Drehorientierung der zweiten Seite auf die Drehorientierung der ersten Seite erlaubt. Das Werkstück kann ohne übermäßig hohe Genauigkeitsanforderungen transferiert werden. Die Ausrichtung in der Spannvorrichtung ist trotzdem hochgenau.

Gemäß einer weiteren beispielhaften Ausgestaltung der Werkzeugmaschine ist die Spannvorrichtung eine sekundäre Spannvorrichtung zum Spannen des Werkstücks zur Bearbeitung einer zweiten Seite des Werkstücks, wobei die Werkzeugmaschine ferner mit einer primären Spannvorrichtung zum Spannen des Werkstücks zur Bearbeitung einer ersten Seite des Werkstücks bestückbar ist, und wobei die Ausrichtung des Werkstücks in der zweiten Spannvorrichtung anhand eines bei der Bearbeitung der ersten Seite des Werkstücks erzeugten Orientierungsabschnitts des Werkstücks erfolgt.

Für ein Umsetzen des Werkstücks ist bedarfsweise geeignete Handhabungstechnik vorgesehen. Das Greifen und Umsetzen des Werkstücks muss nicht mit allerhöchster Genauigkeit erfolgen. Es ist grundsätzlich vorstellbar, die Spannvorrichtungen selbst zu wechseln, so dass ein und dieselbe Werkzeugmaschine zur Bearbeitung der ersten Seite und der zweiten Seite des Werkstücks genutzt werden kann. Es ist auch vorstellbar, eine Werkzeugmaschine mit zwei oder mehr Spindeln und zwei oder mehr Werkstückhaltern vorzusehen. Auf diese Weise lässt sich die Produktivität erhöhen. Es ist grundsätzlich auch vorstellbar, in einer Werkzeugmaschine sowohl eine primäre Spannvorrichtung für die erste Seite als auch eine sekundäre Spannvorrichtung für die zweite Seite vorzusehen.

Gemäß einem weiteren Aspekt bezieht sich die vorliegende Offenbarung auf eine Fertigungsanlage zur Bearbeitung, die Folgendes aufweist:
- zumindest eine Werkzeugmaschine mit einem Gestell, zumindest einem Werkstücktisch zur Aufnahme eines Werkstückhalters und mit zumindest einer Werkzeugspindel,
- zumindest eine am Werkstücktisch montierbare primäre Spannvorrichtung zur Bearbeitung einer ersten Seite eines Werkstücks,
- zumindest eine Spannvorrichtung, die gemäß zumindest einer der hierin beschriebenen Ausführungsformen gestaltet und als am Werkstücktisch montierbare sekundäre Spannvorrichtung zur Bearbeitung einer zweiten Seite des Werkstücks ausgebildet ist,
   wobei der Orientierungsabschnitt des Werkstücks durch die Bearbeitung der ersten Seite des Werkzeugs erzeugt ist.

Gemäß einer beispielhaften Ausgestaltung umfasst die Fertigungsanlage eine erste Werkzeugmaschine, die die primäre Spannvorrichtung zur Bearbeitung der ersten Seite trägt, und eine zweite Werkzeugmaschine, die die sekundäre Spannvorrichtung zur Bearbeitung der zweiten Seite trägt. Ferner kann die Fertigungsanlage geeignete Handhabungstechnik aufweisen, um Werkstücke zwischen der ersten Werkzeugmaschine und der zweiten Werkzeugmaschine zu transferieren.

Gemäß einem weiteren Aspekt bezieht sich die vorliegende Offenbarung auf ein Verfahren zur Herstellung eines Werkstücks, mit den folgenden Schritten:
- Bearbeitung einer ersten Seite des Werkstücks mit einer Werkzeugmaschine, wobei das Werkstück durch eine primäre Spannvorrichtung gespannt ist,
- Bereitstellung einer sekundären Spannvorrichtung, die gemäß zumindest einer der hierin beschriebenen Ausführungsformen gestaltet ist,
- Ermittlung einer Drehorientierung der Drehorientierungskontur der sekundären Spannvorrichtung, insbesondere mit einem Messtaster,
- Durchführung einer rechentechnischen Achskorrektur auf Basis der erfassten Drehorientierung, und
- Bearbeitung einer zweiten Seite des Werkstücks, die der ersten Seite gegenüberliegt, mit einer Werkzeugmaschine, wobei das Werkstück durch die sekundäre Spannvorrichtung gespannt ist.

Die Achskorrektur erlaubt eine hochgenaue Bearbeitung der zweiten Seite in Bezug auf die zuvor bearbeitete erste Seite. Die Drehorientierung für die Bearbeitung der zweiten Seite kann über die Erfassung der Drehorientierung der Drehorientierungskontur bestimmt werden. Dies kann durch ein direktes Antasten (zum Beispiel taktil oder optisch) der Drehorientierungskontur oder ein indirektes Antasten der Drehorientierungskontur (durch taktile oder optische Antastung eines in der Drehorientierungskontur aufgenommenen Werkstücks) erfolgen. Nach erfolgter Achskorrektur können weitere Werkstücke bearbeitet werden. Die gewünschte Ausrichtung wird durch die Drehorientierungskontur und deren bekannte Drehausrichtung gewährleistet.

Weitere Merkmale und Vorteile ergeben sich aus der nachfolgenden Beschreibung mehrerer bevorzugter Ausführungsbeispiele unter Bezugnahme auf die Zeichnungen. Es zeigen:
- Fig. 1:: eine perspektivische Ansicht einer Werkzeugmaschine;
- Fig. 2: eine perspektivische Ansicht eines Werkstücks in Form eines Impellers;
- Fig. 3:: eine schematische Ansicht einer ersten Spannvorrichtung zur Bearbeitung einer ersten Seite des anhand Fig. 2 veranschaulichten Werkstücks;
- Fig. 4:: eine schematische Ansicht einer zweiten Spannvorrichtung zur Bearbeitung einer zweiten Seite des anhand Fig. 2 veranschaulichten Werkstücks;
- Fig. 5:: eine perspektivische Ansicht des Werkstücks gemäß Fig. 2 in abweichender Orientierung;
- Fig. 6:: eine perspektivische Ansicht einer Drehrichtungskontur zur Verwendung bei einer Spannvorrichtung für das Werkstück gemäß Fig. 5;
- Fig. 7:: eine perspektivische Ansicht des anhand der Figuren 2 und 5 veranschaulichen Werkstücks in einem unter Verwendung der Drehorientierungskontur gemäß Fig. 6 erzielten Sitz an einem Werkstückhalter;
- Fig. 8:: eine perspektivische Ansicht einer weiteren Ausgestaltung eines Werkstücks in Form eines Impellers;
- Fig. 9:: eine perspektivische Ansicht einer Drehrichtungskontur zur Verwendung bei einer Spannvorrichtung für das Werkstück gemäß Fig. 8;
- Fig. 10:: eine perspektivische Ansicht des anhand der Fig. 8 veranschaulichen Werkstücks in einem unter Verwendung der Drehorientierungskontur gemäß Fig. 9 erzielten Sitz an einem Werkstückhalter;
- Fig. **11:**: eine schematische Teilansicht einer Werkzeugmaschine mit einer ersten Spannvorrichtung zur Bearbeitung einer ersten Seite eines Werkstücks;
- Fig. 12:: eine schematische Teilansicht einer Werkzeugmaschine mit einer zweiten Spannvorrichtung zur Bearbeitung einer zweiten Seite des in Fig. 11 gezeigten Werkstücks;
- Fig. 13:: eine schematische Ansicht einer Fertigungsanlage mit zwei Werkzeugmaschinen zur Herstellung eines Werkstücks unter Bearbeitung einer ersten Seite und einer zweiten Seite;
- Fig. 14:: eine Detailansicht einer der Werkzeugmaschinen der Fertigungsanlage gemäß Fig. 13 zur Veranschaulichung eines Messvorgangs;
- Fig. 15:: eine perspektivische Ansicht einer Ausgestaltung einer Drehorientierungskontur mit integrierten Kanälen für Blasluft; und
- Fig. 16:: ein vereinfachtes Blockdiagramm zur Veranschaulichung einer beispielhaften Ausgestaltung eines Verfahrens zur Herstellung eines Werkstücks, umfassend eine Bearbeitung einer ersten Seite und einer der ersten Seite gegenüberliegenden zweiten Seite.

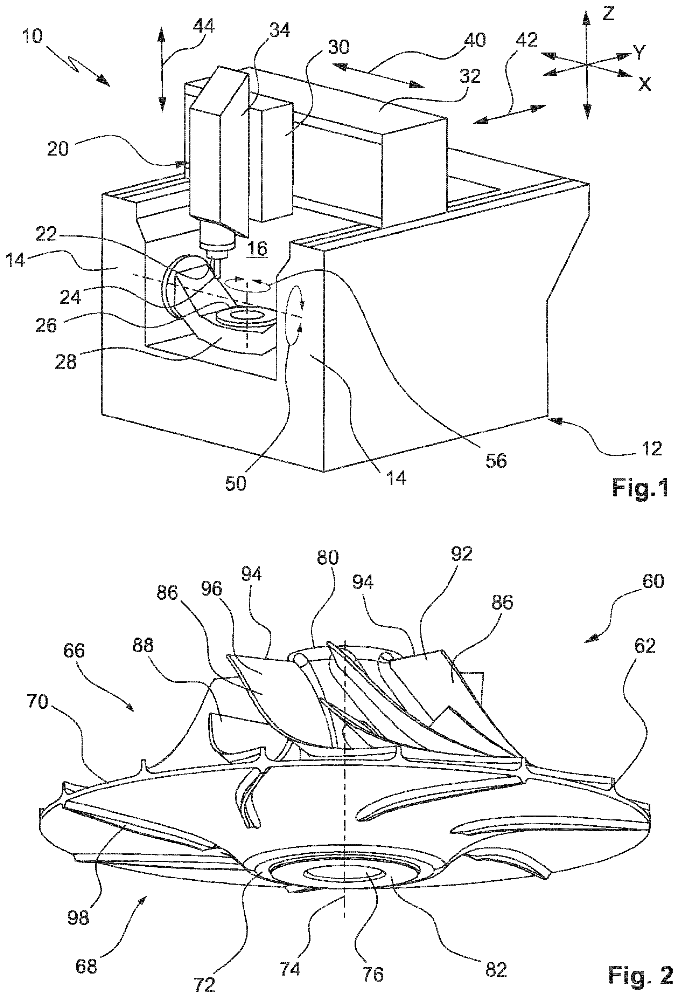

Fig. 1 veranschaulicht anhand einer perspektivischen Darstellung die Grundstruktur einer insgesamt mit 10 bezeichnete Werkzeugmaschine. In Fig. 1 ist die Werkzeugmaschine 10 als sogenannte Gantry-Maschine gestaltet. Dies ist nicht einschränkend zu verstehen. Es sind auch Gestaltungen in Portalbauweise (beispielsweise mit stehendem Portal), in Fahrständerbauweise, oder dergleichen vorstellbar.

In Fig. 1 ist aus Veranschaulichungsgründen ein kartesisches Koordinatensystem X-Y-Z dargestellt. Das Koordinatensystem dient zur Veranschaulichung grundlegender Orientierungen und Bewegungsachsen der Werkzeugmaschine 10 sowie von deren Komponenten. Eine mit X bezeichnete Achse kennzeichnet allgemein eine Längserstreckung. Eine mit Y bezeichnete kennzeichnet allgemein eine Tiefenerstreckung. Im Ausführungsbeispiel definieren die Achsen X und Y gemeinsam eine Horizontalebene. Eine mit Z bezeichnete Achse kennzeichnet allgemein eine Höhenerstreckung. Das Koordinatensystem X-Y-Z dient in erster Linie zur Veranschaulichung und ist nicht in einschränkender Weise zu verstehen. Es versteht sich, dass auch andere Koordinatensysteme zur Beschreibung der Werkzeugmaschine 10 und deren Komponenten nutzbar sind. Der Fachmann kann entsprechende Transformationen vornehmen.

Im Ausführungsbeispiel gemäß Fig. 1 weist die Werkzeugmaschine 10 ein Gestell 12 auf, das auch als Basis oder Bett bezeichnet werden kann. Bei der gezeigten Gestaltung als Gantry-Maschine umfasst das Gestell 12 zwei seitliche Wangen 14, an deren Oberseite Führungen (Y-Führungen) ausgebildet sind. Die Werkzeugmaschine 10 definiert einen Arbeitsraum 16, in dem Werkstücke bearbeitet werden können, insbesondere durch spanabhebende Bearbeitung. Üblicherweise ist der Arbeitsraum 16 eingehaust (in Fig. 1 nicht gezeigt).

Die Werkzeugmaschine 10 umfasst eine Werkzeugspindel 20 mit einem Werkzeughalter 22, der zur Aufnahme eines Werkzeugs 24 ausgebildet ist. Im Ausführungsbeispiel ist die Werkzeugspindel 20 vertikal orientiert. Die Werkzeugspindel 20 ist in Fig. 1 als hängende Spindel gestaltet. Werkzeuge 24 können um eine vertikal orientierte Spindelachse angetrieben werden. Die Werkzeugspindel 20 ist relativ zu einer Werkstückauflage 26 beweglich, um ein dort angeordnetes Werkstück (in Fig. 1 nicht gezeigt) zu bearbeiten. Im Ausführungsbeispiel ist die Werkstückauflage 26 auf einer Schwenkbrücke 28 angeordnet, die beidseitig an den Wangen 14 des Gestells 12 gelagert ist. Andere Gestaltungen sind vorstellbar. Die Werkzeugspindel 20 ist in Fig. 1 als hängende vertikale Spindel gestaltet.

Die Werkzeugspindel 20 ist in drei linearen Achsen relativ zur Werkstückauflage 26 verfahrbar. Zu diesem Zweck sind im Ausführungsbeispiel ein X-Schlitten 30, ein Y-Schlitten 32 und ein Z-Schlitten 34 vorgesehen. Der Y-Schlitten 32 sitzt auf den Wangen 14 des Gestells 12. Der X-Schlitten 30 ist am Y-Schlitten 32 linear verfahrbar angeordnet. Der Z-Schlitten 34 ist am X-Schlitten 30 linear verfahrbar angeordnet. Der Z-Schlitten trägt die Werkzeugspindel 20. Der X-Schlitten 30 trägt den Z-Schlitten 34. Der Y-Schlitten 32 trägt den X-Schlitten 30.

Der X-Schlitten 30 ist in einer X-Achse 40 (X-Richtung) entlang des Y-Schlittens 32 translatorisch verfahrbar. Der Y-Schlitten 32 ist in einer Y-Achse 42 (Y-Richtung) entlang der Wangen 14 des Gestells 12 translatorisch verfahrbar. Der Z-Schlitten 34 ist in einer Z-Achse 44 (Z-Richtung) entlang des X-Schlittens 30 verfahrbar. Der Z-Schlitten 34 ist vertikal verfahrbar. Der X-Schlitten 30 und der Y-Schlitten 32 sind horizontal verfahrbar. Im Ausführungsbeispiel stellen die Schwenkbrücke 28 (A-Achse 50, vergleiche Schwenkbewegungen um die X-Achse) und die Werkstückauflage 26 (C-Achse 56, vergleiche Schwenkbewegungen um die Z-Achse) weitere (rotatorische) Bewegungsachsen bereit. Insgesamt ist mit der Werkzeugmaschine 10 eine 5-Achs-Bearbeitung möglich. Andere Gestaltungen von Werkzeugmaschine 10 sind vorstellbar, beispielsweise mit einer 4-Achs-Kinematik, einer 3-Achs-Kinematik oder dergleichen.

Die Bewegung entlang der Achsen X, Y, Z kann durch die Spindel 22 oder die Werkstückauflage 26 erfolgen. Wesentlich ist, dass zwischen Spindel 22 und Werkstückauflage 26 eine Relativbewegung zustande kommt. Es sind auch Ausführungsformen vorstellbar, bei denen beispielsweise die Bewegung entlang der Y-Achse (Pfeil 42) durch ein Verfahren der Werkstückauflage 26 entlang des Gestells 12 realisiert wird.

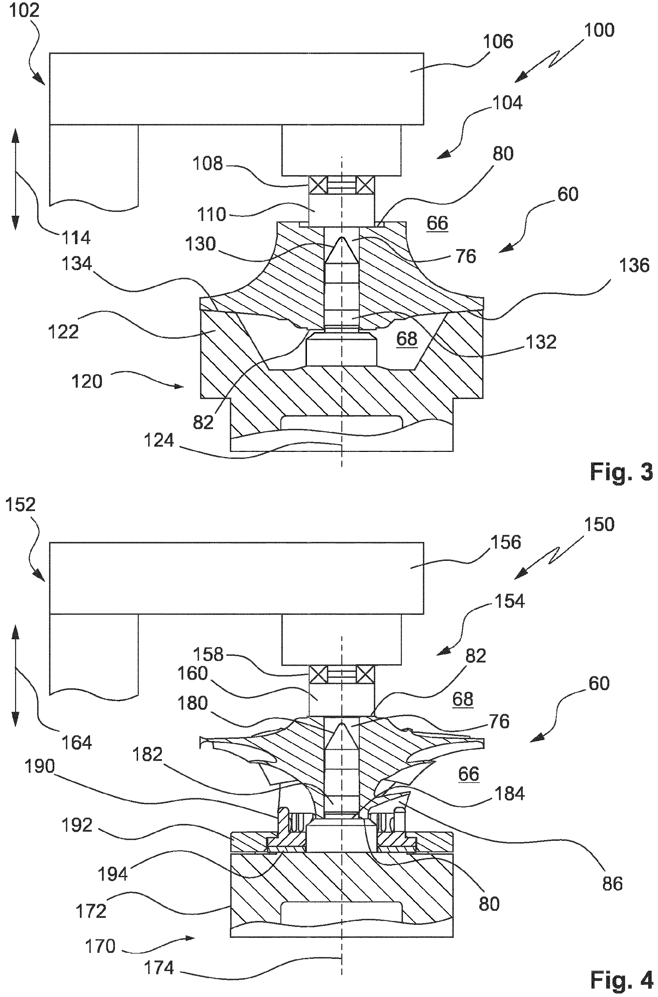

Fig. 2 veranschaulicht anhand einer perspektivischen Darstellung einer Ausgestaltung eines spanend erzeugten Werkstücks 60. Vergleiche zur Gestaltung des Werkstücks 60 auch die Figuren 3-5. Bei dem Werkstück 60 handelt es sich beispielhaft um einen Impeller 62. Das Werkstück 60 kann auch als Verdichterrad oder dergleichen bezeichnet werden. Das Werkstück 60 umfasst eine erste Seite 66 und eine hiervon abgewandte zweite Seite 68. Die erste Seite 66 kann auch als Vorderseite beteiligt werden. Die zweite Seite 68 kann auch als Rückseite bezeichnet werden. Die Begriffe erste Seite, zweite Seite, Vorderseite und Rückseite sind nicht einschränkend zu verstehen, sondern dienen eher zur Veranschaulichung. Die unterschiedliche Bezeichnung der Seiten 66, 68 stellt insbesondere auf die Reihenfolge bei der Bearbeitung ab. Zwischen den Seiten 66, 68 erstreckt sich im Ausführungsbeispiel eine umlaufende Wand 70, die die beiden Seiten 66, 68 voneinander abgegrenzt. Die umlaufende Wand 70 ist beispielsweise scheibenförmig oder diskusförmig gestaltet, dies ist nicht einschränkend zu verstehen.

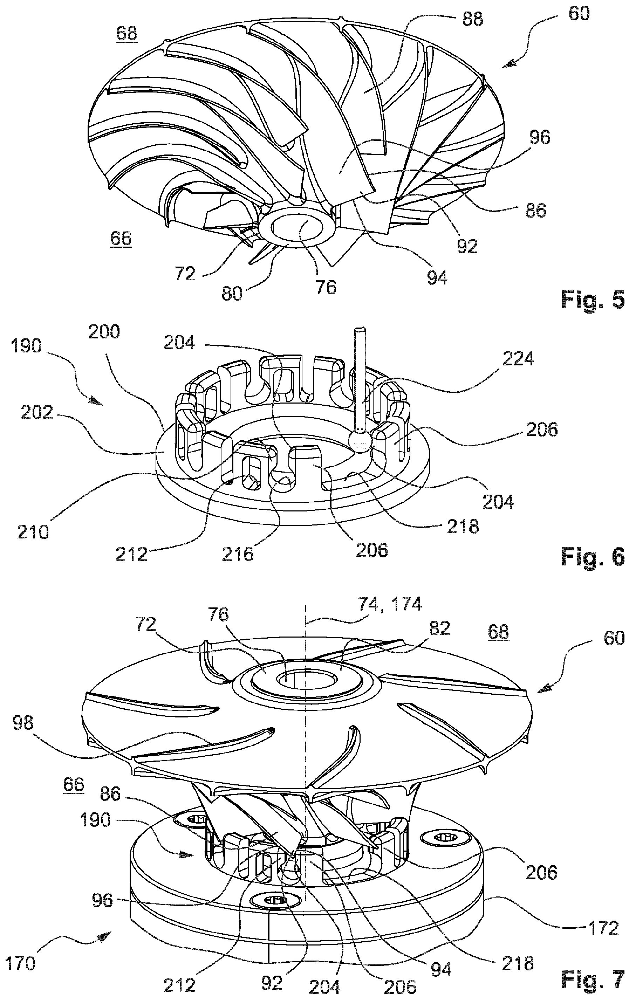

In seinem Zentrum weist das Werkstück 60 eine Nabe 72 auf, durch die sich eine Längsachse 74 erstreckt. Die Längsachse 74 dient im Betrieb des Werkstücks 60 als Rotationsachse. Entlang der Längsachse 74 erstreckt sich eine Zentrierausnehmung 76. Im Ausführungsbeispiel ist die Zentrierausnehmung 76 als Durchgangsöffnung/Durchgangsbohrung gestaltet, vergleiche Fig. 3 und Fig. 4. Die Nabe 72 weist auf der ersten Seite 66 eine Stirn 80 auf, vergleiche auch Fig. 5. Die Nabe 72 weist auf der zweiten Seite 68 eine Stirn 82 auf. Die Stirn 80 und die Stirn 82 können zur axialen Ausrichtung des Werkstücks 60 dienen.

Das Werkstück 60 trägt im Ausführungsbeispiel auf der ersten Seite 66 Schaufeln 86 eines ersten Typs und Schaufeln 88 eines zweiten Typs. Die Schaufeln 86, 88 sind jeweils um die Längsachse 74 verteilt angeordnet. Es sind jeweils mehrere der Schaufeln 86, 88 vorgesehen, die sich abwechseln.

Die Schaufeln 86 bilden nahe ihres von der zweiten Seite 68 abgewandten Endes jeweils einen Orientierungsabschnitt 92 zur Drehorientierung des Werkstücks 60. Der Orientierungsabschnitt 92 umfasst eine Kante 94 bei einem stirnseitigen Ende der Schaufeln 86. Die Kante 94 dient als Anschlag für die Drehausrichtung des Werkstücks 60. Die Orientierungsabschnitt 92 der Schaufeln 86 umfasst ferner einen Stützbereich 96, der von der Kante 94 beabstandet und auf einer von der zweiten Seite 68 abgewandten Fläche der Schaufeln 86 ausgebildet ist. Der Stützbereich 96 vereinfacht die gewünschte Ausrichtung des Werkstücks 60.

Der Orientierungsabschnitt 92 (umfassend beispielsweise die Kante 94 und den Stützbereich 96) ist in beispielhaften Ausgestaltungen ein ohnehin erzeugter Abschnitt der Schaufeln 86. Auf der gegenüberliegenden zweiten Seite 68 sind Schaufeln 98 ausgebildet, die in bestimmter Drehorientierung zu den Schaufeln 86, 88 auf der ersten Seite 66 stehen. Die Fertigung der Schaufeln 98 der zweiten Seite 68 erfolgt in einer anderen Aufspannung als die Fertigung der Schaufeln 86, 88 der ersten Seite 66. Dies wird nachfolgend mit Bezugnahme auf die Figuren 3-7 veranschaulicht.

Fig. 3 veranschaulicht anhand einer schematischen Darstellung eine erste Spannvorrichtung 100 zur Bearbeitung der ersten Seite 66 des Werkstücks 60. Die Spannvorrichtung 100 ist beispielsweise als sogenannter Schwenkspanner 102 ausgebildet. Die Spannvorrichtung 100 umfasst einen Niederhalter 104. Im Ausführungsbeispiel ist der Niederhalter 104 an einem Ausleger 106 des Schwenkspanners 102 angeordnet. Der Niederhalter 104 umfasst ein Drehlager 108 und ein Druckstück 110, das das Werkstück 60 auf der ersten Seite 66 bei der Stirn 80 kontaktiert. Über das Drehlager 108 erfolgt eine Entkopplung einer Drehbewegung des Werkstücks 60 von der ersten Spannvorrichtung 100.

Ein mit 114 bezeichneter Doppelpfeil veranschaulicht in Fig. 3 die Spannbewegung bzw. Lösebewegung des Schwenkspanners 102. es versteht sich, dass der Schwenkspanner 102 gegebenenfalls zusätzlich seitlich verschwenkbar ist, um die Handhabung (Be- und Entladung) des Werkstücks 60 zu ermöglichen.

Die erste Spannvorrichtung 100 umfasst ferner einen Werkstückhalter 120, der beispielsweise am rotierbaren Werkstücktisch 26 der Werkzeugmaschine 10 gemäß Fig. 1 befestigt ist. Der Werkstückhalter 120 umfasst eine um eine Längsachse 124 rotierbare Werkstückauflage 122. Bei gespanntem Werkstück 60 fallen die Längsachse 124 und die Längsachse 74 (Fig. 2) zusammen. Der Werkstückhalter 120 trägt ferner einen Zentrierdorn 130, der sich in die Zentrierausnehmung 76 (auch: Zentrumsdurchmesser) des Werkstücks 60 erstreckt. Der Zentrierdorn 130 ist mit seiner Spitze dem Druckstück 110 des Niederhalters 104 zugewandt. Im Ausführungsbeispiel zentriert der Zentrierdorn 130 das Werkstück 60 in der Zentrierausnehmung 76 in einem Zentrierbereich 132, der der Stirn 82 benachbart ist. Die Zentrierung des Werkstücks 60 erfolgt also nahe bei dem Werkstückhalter 120.

In Fig. 3 erfolgt eine zusätzliche Abstützung des Werkstücks 60 über eine Stützfläche 134 der Werkstückauflage 122, die von einer korrespondierenden Auflagefläche 136 kontaktiert wird, die einem Umfang des Werkstücks 60 benachbart ist. Mit anderen Worten ist die Stützfläche 134 deutlich radial von der Längsachse 124 beabstandet. Die Stützfläche 134 kann als Ringfläche oder als Ringabschnittsfläche gestaltet sein. Eine Auflage des Werkstücks 60 mit dessen Auflagefläche 136 kann ringförmig oder abschnittsweise erfolgen. Die in Fig. 3 gezeigte Gestaltung der ersten Spannvorrichtung 100 erschwert mangels Zugänglichkeit eine Bearbeitung des Werkstücks 60 an der zweiten Seite 68. Je nach Gestaltung der Werkstückauflage 122 ist die zweite Seite 68 gegebenenfalls nicht für ein Bearbeitungswerkzeug zugänglich.

Das Werkstück 60 ist bei der in Fig. 3 gezeigten Ausgestaltung der Spannvorrichtung 100 axial zwischen der Stirn 80 und der Auflagefläche 136 eingespannt.

Fig. 4 veranschaulicht eine weitere Spannvorrichtung 150, die aus Veranschaulichungsgründen als zweite Spannvorrichtung 150 bezeichnet wird. Die Spannvorrichtung 150 dient zur Aufnahme des Werkstücks 60 in einer Spannstellung, in der das Werkstück 60 auf der zweiten Seite 68 bearbeitet werden kann. Auf diese Weise lassen sich beispielsweise auch auf der zweiten Seite 68 Schaufeln 98 o. ä. Konturen erzeugen, vergleiche Fig. 2. Ebenso kann die Wand 70 bearbeitet werden

Die Spannvorrichtung 150 ist beispielsweise als sogenannter Schwenkspanner 152 ausgebildet. Die Spannvorrichtung 150 umfasst einen Niederhalter 154. Im Ausführungsbeispiel ist der Niederhalter 154 an einem Ausleger 156 des Schwenkspanners 152 angeordnet. Der Niederhalter 154 umfasst ein Drehlager 158 und ein Druckstück 160, das das Werkstück 60 auf der zweiten Seite 68 bei der Stirn 82 axial kontaktiert. Über das Drehlager 158 erfolgt eine Entkopplung einer Drehbewegung des Werkstücks 60 von der ersten Spannvorrichtung 150.

Das Werkstück 60 ist in der zweiten Spannvorrichtung 150 im Vergleich zur Spannvorrichtung 100 in einer umgekehrten Orientierung gehalten. Bei der Spannvorrichtung 150 ist die zweite Seite 68 dem Niederhalter 154 zugewandt. Bei der Spannvorrichtung 100 ist die erste Seite 66 dem Niederhalter 104 zugewandt.

Ein mit 164 bezeichneter Doppelpfeil veranschaulicht in Fig. 4 die Spannbewegung bzw. Lösebewegung des Schwenkspanners 152. Es versteht sich, dass der Schwenkspanner 152 gegebenenfalls zusätzlich seitlich verschwenkbar ist, um die Be- und Entladung des Werkstücks 60 zu ermöglichen.

Die zweite Spannvorrichtung 150 umfasst ferner einen Werkstückhalter 170, der beispielsweise am rotierbaren Werkstücktisch 26 der Werkzeugmaschine 10 gemäß Fig. 1 befestigt ist. Der Werkstückhalter 170 umfasst eine um eine Längsachse 174 rotierbare Werkstückauflage 172. Bei gespanntem Werkstück 60 fallen die Längsachse 174 und die Längsachse 74 (Fig. 2) zusammen. Der Werkstückhalter 170 trägt ferner einen Zentrierdorn 180, der sich in die Zentrierausnehmung 76 (beispielhaft: Zentrumsdurchmesser) des Werkstücks 60 erstreckt. Der Zentrierdorn 180 ist mit seiner Spitze dem Druckstück 160 des Niederhalters 154 zugewandt. Im Ausführungsbeispiel zentriert der Zentrierdorn 180 das Werkstück 60 in der Zentrierausnehmung 76 in einem Zentrierbereich 182, der der Stirn 82 benachbart ist. Die Zentrierung des Werkstücks 60 erfolgt also nahe bei den Werkstückhalter 170. Im gezeigten Ausführungsbeispiel wird der Niederhalter 154 mit dem Druckstück 160 bewusst nicht zur Zentrierung genutzt.

Der Zentrierdorn 180 stellt im Ausführungsbeispiel eine Auflagefläche 184 bereit, die die Stirn 80 der Nabe 72 auf der ersten Seite 66 des Werkstücks 60 kontaktiert. Es versteht sich, dass die Auflagefläche 184 alternativ auch bei der Werkstückauflage 172 ausgebildet sein kann. Das Werkstück 60 ist bei der in Fig. 4 gezeigten Ausgestaltung der Spannvorrichtung 150 axial zwischen der Stirn 82 und der Stirn 80 eingespannt. Ebenso erfolgt die Momentübertragung zumindest im Wesentlichen zwischen der Auflagefläche 184 und der Stirn 80 des Werkstücks 60.

In beispielhaften Ausgestaltungen ist die Auflagefläche 184 mit einer reibungserhöhenden Beschichtung versehen, um das übertragbare Drehmoment bei gegebener Axialkraft zu erhöhen. Dies trägt den Umstand Rechnung, dass die Auflagefläche 184 und die dieser zugewandte Stirn 80 einen Durchmesser aufweisen, der klein im Vergleich zum Durchmesser des Werkstücks 60 ist, der sich für die Kraftübertragung und Momentübertragung zwischen der Stützfläche 134 und der Auflagefläche 136 ergibt (vergleiche Fig. 3).

Bei der Bearbeitung der zweiten Seite 68 des Werkstücks 60 ist eine präzise Drehausrichtung zwischen den Konturen der ersten Seite 66 und der zweiten Seite 68 gewünscht. Zur Erleichterung des Ausrichtens und zur Vermeidung einer Vielzahl individueller Messungen weist die Spannvorrichtung 150 eine Drehorientierungskontur 190 auf, die der Werkstückauflage 172 und dem Werkstück 60 zwischengeordnet ist. Beim Werkstück 60 selbst weisen zumindest einige der Schaufeln 68 hieran angepasste Gegenkonturen auf, die eine genaue Drehausrichtung des Werkstücks 60 in der Spannvorrichtung 150 erlauben. Die zweite Seite 68 ist in der Spannvorrichtung 150 gut für die Bearbeitung zugänglich.

Im Ausführungsbeispiel gemäß Fig. 4 ist die Drehorientierungskontur 190 lösbar an der Werkstückauflage 172 befestigt. Eine Montageplatte 192 drückt die Drehorientierungskontur 190 in Richtung auf die Werkstückauflage 172. Beispielhaft erfolgt dies gegen eine ringförmige oder scheibenförmige Unterlage 194, ohne dass die einschränkend zu verstehen ist. Beispielhaft ist die Drehorientierungskontur 190 verschraubt. Auf diese Weise kann die Drehorientierungskontur 190 im Verschleißfall schnell gewechselt werden. Dies ist etwa dann von Vorteil, wenn die Drehorientierungskontur 190 aus Rücksicht auf das Werkstück 60 aus einem eher weichen Werkstoff besteht. Ferner können auf diese Weise unterschiedliche Drehorientierungskonturen 190 an der Werkstückauflage 172 befestigt werden, um unterschiedliche Werkstücke bearbeiten zu können.

Auf Basis von Fig. 4 veranschaulichen die Figuren 5, 6 und 7 anhand perspektivischer Darstellungen das Zusammenwirken zwischen dem Werkstück 60 und der Drehorientierungskontur 190 bei der Aufnahme des Werkstücks 60 am Werkstückhalter 170 der Spannvorrichtung 150.

Fig. 5 zeigt das Werkstück 60 in einer perspektivischen Darstellung von der ersten Seite 66 her, vergleiche hierzu auch Fig. 2 mit einer Darstellung von der zweiten Seite 68 her. Fig. 6 veranschaulicht eine beispielhafte Gestaltung der Drehorientierungskontur 190. Die Drehorientierungskontur 190 ist beispielhaft als Krone 200 gestaltet. Die Drehorientierungskontur 190 umfasst eine Basis 202, die hier ringförmig gestaltet ist. Ausgehend von der Basis 202 erstrecken sich Drehanschläge 204, die an Zähnen 206 ausgebildet sind. Fig. 7 zeigt einen Zustand, in dem das Werkstück 60 am Werkstückhalter 170 aufgenommen ist und mit der ersten Seite 66 die Drehorientierungskontur 190 kontaktiert. Zumindest einige der Kanten 94 der Orientierungsabschnitte 92 der Schaufeln 86 des Werkstücks 60 kontaktieren Drehanschläge 204 der Drehorientierungskontur 190. Auf diese Weise ergibt sich eine genaue Drehausrichtung des Werkstücks 60 um die Längsachse 74, 174.

Die Drehorientierungskontur 190 weist ferner sogenannte Stützstege 210 auf, die zumindest einigen der Zähne 206 mit Drehanschlag 204 benachbart angeordnet sind. Die Stützstege 210 sind nachgiebig gestaltet und beispielhaft mit einer Ausnehmung 212 versehen. Die Stützstege 210 können ausweichen, wenn das Werkstück 60 mit den Schaufeln 86 in die Drehorientierungskontur 190 einfährt. Fig. 7 veranschaulicht, dass die Stützstege 210 jeweils von einem Stützbereich 96 einer Schaufel 86 des Werkstücks 60 kontaktiert werden können. Der Stützbereich 96 ist von zweiten Seite 68 abgewandt und gegenüber der Längsachse 74, 174 geneigt. Auf diese Weise ergibt sich bei einem axialen Andrücken des Werkstücks 60 (vergleiche den Niederhalter 154 in Fig. 4) eine Drehkomponente, die die Kanten 94 gegen die Drehanschläge 204 drückt (in Fig. 7 im Gegenuhrzeigersinn).

Zum Toleranzausgleich und zur Gewährleistung einer sicheren Anlage an den Drehanschlägen 204 sind die Stützstege 210 im Ausführungsbeispiel nachgiebig gestaltet. Nachgiebig bedeutet im Rahmen dieser Ausgestaltung, dass ein Widerstandsmoment der Stützstege 210 gegenüber einer Verformung bei der Kontaktierung durch die Schaufeln 86 geringer bis deutlich geringer ist als ein Widerstandsmoment der Zähne 206 mit den Drehanschlägen 204 bei derselben Kontaktierung.

In Fig. 6 ist mit 216 eine Lücke in der Krone 200 zwischen einem Stützsteg 210 und einem mit einen Drehanschlag 204 versehenen Zahn 206 angedeutet. In die Lücke 216 kann eine Schaufel 86 des Werkstücks 60 einrücken. In einer beispielhaften Ausgestaltung weist die Krone 200 eine übereinstimmende Zahl an Stützstegen 210, Zähnen 206 und diesen zwischengeordneten Lücken 216 auf.

Fig. 6 veranschaulicht eine abweichende Gestaltung, bei der die feste Folge von Zähnen 206, Lücken 216 und Stützstegen 210 unterbrochen ist. Zwischen zwei Zähnen 206, die jeweils mit einem Drehanschlag 204 versehen sind, ist eine große/weite Lücke 218 ausgebildet. Die Lücke 218 ist im Ausführungsbeispiel so gewählt, dass ein Messtaster 224 einrücken und dort einen Drehanschlag 204 kontaktieren kann. Auf diese Weise kann bei einer montierten Drehorientierungskontur 190 die gegebene Drehorientierung in der Spannvorrichtung 150 ermittelt werden. Da das Werkstück 60 mit den Kanten 94 der Schaufeln 86 an den Drehanschlägen 204 zur Anlage kommt, ergibt sich somit die Möglichkeit zur hochpräzisen Drehausrichtung zwischen der ersten Seite 66 und der zweiten Seite 68. Es versteht sich, dass gegebenenfalls auch ein Messtaster 224 in eine der Lücken 216 einrücken und dort messen kann, wenn dies die Breite der Lücke 216 erlaubt.

Fig. 7 zeigt die wiederholgenaue Orientierung des Werkstücks 60 am Werkstückhalter 170, wobei die Drehorientierung durch die Drehorientierungskontur 190 gewährleistet wird.

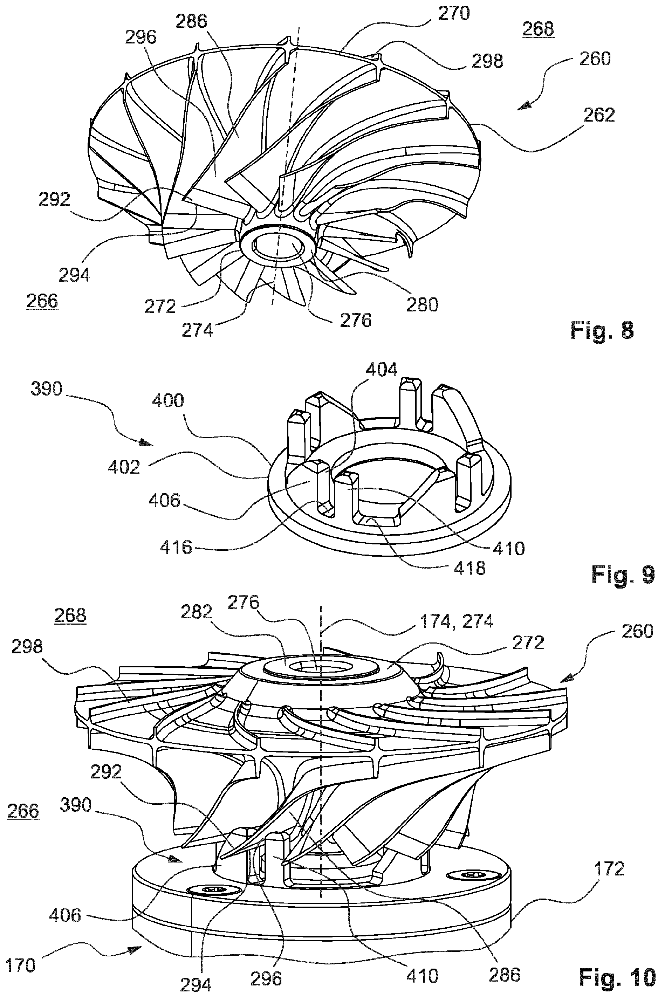

Die Figuren 8-10 veranschaulichen eine alternative Ausgestaltung eines mit 260 bezeichneten Werkstücks. Für die nachfolgende Beschreibung wird explizit Bezug genommen auf die vorhergehenden Erläuterungen in Zusammenhang mit den Figuren 2-7.

Das Werkstück 260 ist ähnlich wie das Werkstück 60 (Fig. 2-7) als Impeller 262 oder dergleichen gestaltet. Das Werkstück 260 umfasst eine erste Seite 266 und eine zweite Seite 268, die in unterschiedlichen Aufspannungen bearbeitet werden. Geeignete Spannvorrichtungen sind die Spannvorrichtung 100 (Fig. 3) für die erste Seite 266 und die Spannvorrichtung 150 (Fig. 4) für die zweite Seite 268. Zwischen der ersten Seite 266 und der zweiten Seite 268 ist im Ausführungsbeispiel eine Wand 270 ausgebildet, die die erste Seite 266 und die zweite Seite 268 voneinander abgegrenzt.

Das Werkstück 260 umfasst eine Nabe 272, durch die sich eine Längsachse 274 erstreckt. In der Nabe 272 ist eine Zentrierausnehmung 276 angeordnet, die konzentrisch zur Längsachse 274 ausgebildet ist. Die Nabe 272 weist bei der ersten Seite 266 eine Stirn 280 (Fig. 8) und bei der zweiten Seite 268 eine Stirn 282 (Fig. 10) auf.

Auf der ersten Seite 266 weist das Werkstück 260 Schaufeln 286 auf. Die Schaufeln 286 dienen bei der Aufnahme in der Spannvorrichtung 150 zur Bearbeitung der zweiten Seite 268 zur Drehausrichtung des Werkstücks 62. Zu diesem Zweck weisen die Schaufeln 286 Orientierungsabschnitte 292 auf. Dies umfasst im Ausführungsbeispiel Kanten 294 und hiervon beabstandete Stützbereiche 296. Die Kanten 294 sind an von der zweiten Seite 268 abgewandten Enden der Schaufeln 286 angeordnet. Die Stützbereiche 296 sind von den Kanten 294 beabstandet aber benachbart zu diesen angeordnet. Bei der zweiten Seite 268 sind Schaufeln 298 ausgebildet, die in bestimmter Drehorientierung zu den Schaufeln 286 auf der ersten Seite 266 stehen.

Fig. 9 zeigt eine perspektivische Ansicht einer Drehorientierungskontur 390, die an die Gestaltung des Werkstücks 260 angepasst ist, insbesondere an die zuvor erzeugte Gestaltung der ersten Seite 266 mit den Schaufeln 286. Fig. 10 zeigt die Drehorientierungskontur 390 in einem im Werkstückhalter 170 angeordneten Zustand zur Aufnahme und Drehausrichtung des Werkstücks 260. Die Drehorientierungskontur 390 ist im Ausführungsbeispiel als Krone 400 ausgebildet und mit einer ringförmigen Basis 402 versehen. Ausgehend von der Basis 402 erstrecken sich mehrere Zähne 406, die jeweils einen Drehanschlag 404 tragen. Die Kanten 294 der Schaufeln 286 können die Drehanschläge 404 kontaktieren. Auf diese Weise wird das Werkstück 260 hochgenau und wiederholgenau im Werkstückhalter 170 ausgerichtet.

Die Drehorientierungskontur 390 weist ferner eine Mehrzahl von Stützstegen 410 auf, an denen jeweils ein Stützbereich 296 der Schaufeln 286 zur Anlage kommen kann. Das Werkstück 260 kann somit hochgenau axial und hinsichtlich seiner Drehorientierung im Werkstückhalter 170 ausgerichtet werden. Die Anlage des Stützbereich 296 am Stützsteg 410 erzeugt beim Vorliegen einer axialen Kraftkomponente eine resultierende Kraft, die die Kanten 294 stärker gegen die Drehanschläge 404 der Zähne 406 drückt (in Fig. 10 im Uhrzeigersinn). Im Vergleich zu den Zähnen 406 sind die Stützstege 410 nachgiebiger gestaltet, so dass bedarfsweise ein Ausweichen der Stützstege 410 ermöglicht ist.

In Fig. 9 ist eine Lücke zwischen einem Drehanschlag 404 und einem Stützsteg 410 mit 416 bezeichnet. Eine Lücke zwischen einer vom Drehanschlag 404 abgewandten Flanke des Zahns 406 und einem folgenden Stützsteg 410 ist mit 418 bezeichnet. Auch bei der in Fig. 9 gezeigten Gestaltung der Drehorientierungskontur 390 kann eine Bestimmung der aktuellen Drehorientierung durch Kontaktieren der Drehorientierungskontur 390 selbst oder durch Kontaktieren eines aufgenommenen Werkstücks 260 (zum Beispiel Referenzteil) erfolgen.

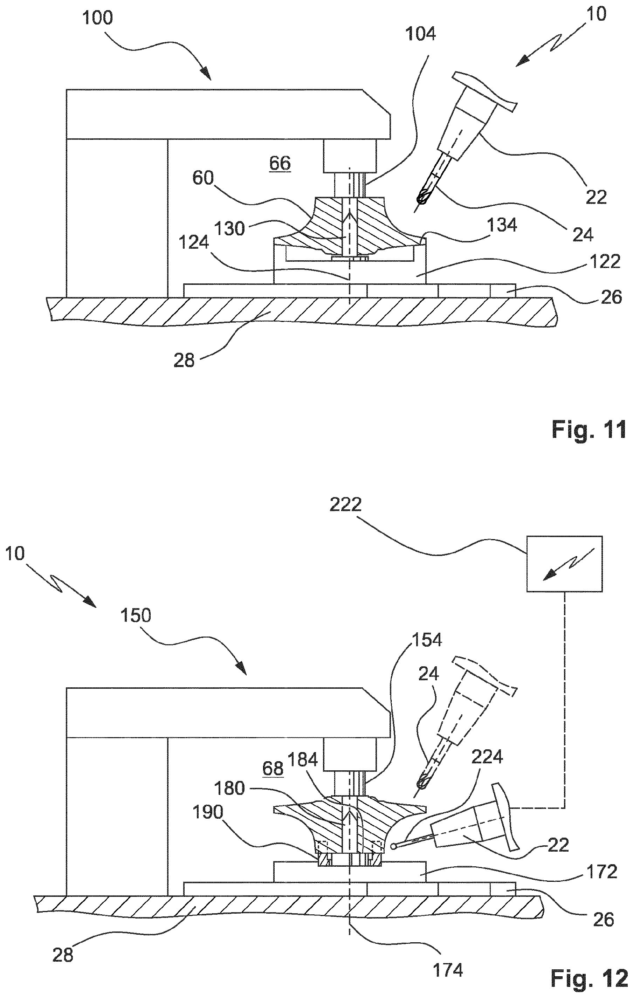

Fig. 11 veranschaulicht anhand einer schematischen Teilansicht einer Werkzeugmaschine 10 die Bearbeitung der ersten Seite 66 des Werkstücks 60. Fig. 12 veranschaulicht anhand einer schematischen Teilansicht die Bearbeitung der zweiten Seite 68 des Werkstücks 60. Die Bearbeitung der ersten Seite 66 und der zweiten Seite 68 kann in ein und derselben Werkzeugmaschine 10 erfolgen, wenn entsprechend umgerüstet wird. Die Bearbeitung kann jedoch auch in unterschiedlichen Werkzeugmaschinen 10 erfolgen.

In Fig. 11 ist das Werkstück 60 durch die Spannvorrichtung 100 am Werkstücktisch 26 der Schwenkbrücke 28 gesichert. Die Spannvorrichtung 100 erlaubt die Bearbeitung der ersten Seite 66, die für das Werkzeug 24 am Werkzeughalter 22 zugänglich ist. Das Werkstück 60 ist axial zwischen dem Niederhalter 104 und der Stützfläche 134 der Werkstückauflage 122 eingespannt. Die Zentrierung erfolgt über den Zentrierdorn 130, der für eine konzentrische Ausrichtung zur Längsachse 124 sorgt.

In Fig. 12 ist das Werkstück 60 durch die Spannvorrichtung 150 am Werkstücktisch 26 der Schwenkbrücke 28 gesichert. Die Spannvorrichtung 150 erlaubt die Bearbeitung der ersten Seite 68, die für das Werkzeug 24 (in Fig. 12 gestrichelt dargestellt) zugänglich ist. Das Werkstück 60 ist axial zwischen dem Niederhalter 154 und der Auflagefläche 184 des Zentrierdorns 180 bzw. der Werkstückauflage 172 eingespannt. Die Zentrierung erfolgt über den Zentrierdorn 180, der für eine konzentrische Ausrichtung zur Längsachse 174 sorgt. Zusätzlich ist eine Drehorientierungskontur 190 vorgesehen, die für die gewünschte Drehorientierung des Werkstücks 60 sorgt.

In Fig. 12 ist ferner schematisch ein Messtaster 224 angedeutet, der im Ausführungsbeispiel am Werkzeughalter 22 gehalten ist. Demgemäß kann der Messtaster 224 mit ähnlichen Freiheitsgraden wie das Werkzeug 24 bewegt werden. Der Messtaster 224 ist mit einer Messeinrichtung 222 der Werkzeugmaschine 10 gekoppelt. Die Messeinrichtung 222 ist beispielsweise Bestandteil einer übergeordneten Steuervorrichtung der Werkzeugmaschine 10. Der Messtaster 224 kann eine aktuelle Drehorientierung des Werkstücks 60 bestimmen. Dies kann durch Kontaktierung der Drehorientierungskontur 190 erfolgen. Es ist jedoch auch eine Kontaktierung des Werkstücks 60 (Referenzteil) vorstellbar. Auf Basis der ermittelten Drehorientierung kann eine Achskorrektur erfolgen, so dass sichergestellt ist, dass die zweite Seite 68 des Werkstücks 60 in der gewünschten Drehorientierung in Bezug auf die erste Seite 66 bearbeitet wird.

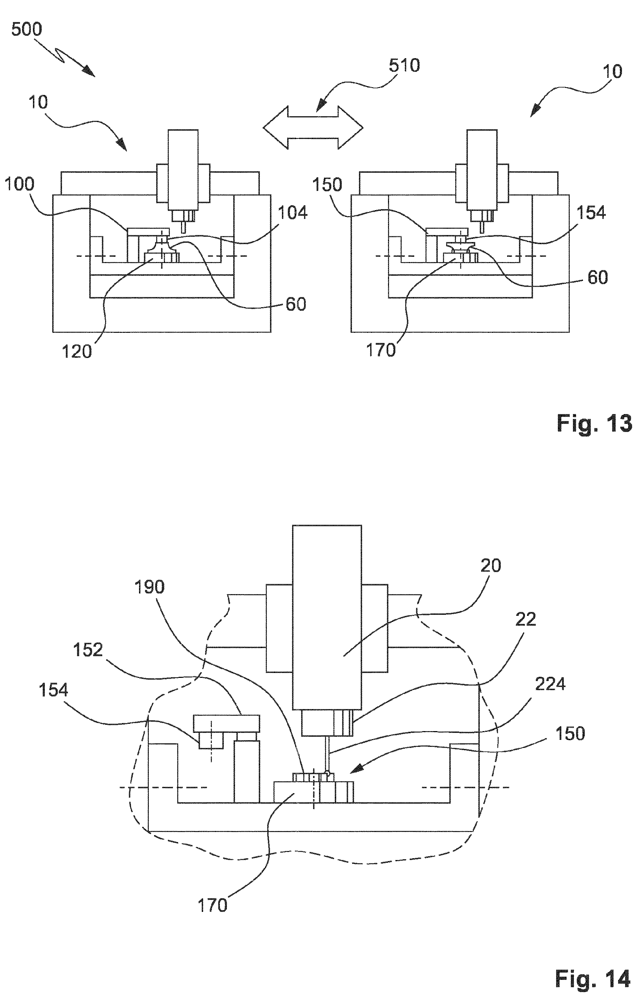

In ähnlicher Weise veranschaulichen die Figuren 13 und 14 anhand schematischer Ansichten die Bearbeitung einschlägiger Werkstücke 60 in einer insgesamt mit 500 bezeichneten Fertigungsanlage. Die Fertigungsanlage 500 weist im Ausführungsbeispiel gemäß Fig. 13 zwei Werkzeugmaschinen 10 auf, die durch entsprechende Handhabungstechnik 510 miteinander verkettet sind. Die Werkzeugmaschinen 10 sind beispielhaft analog zur Werkzeugmaschine 10 gemäß Fig. 1 gestaltet.

Eine der beiden Werkzeugmaschinen 10 trägt eine erste Spannvorrichtung 100 mit Niederhalter 104 und Werkstückhalter 120 zur Bearbeitung einer ersten Seite des Werkstücks 60. Die zweite Werkzeugmaschine 10 trägt eine zweite Spannvorrichtung 150 mit Niederhalter 154 und Werkstückhalter 170 zur Bearbeitung einer zweiten Seite des Werkstücks 60. Die Handhabungstechnik 510 sorgt für einen Transfer des Werkstücks 60 zwischen den beiden Werkzeugmaschinen 10.

Fig. 14 veranschaulicht anhand einer schematischen Darstellung eine Teilansicht der Werkzeugmaschine 10, wobei die zweite Spannvorrichtung 150 mit dem Schwenkspanner 152 außer Eingriff steht und vom Werkzeughalter 170 weggeschwenkt ist. Die Werkzeugspindel 20 trägt an ihrem Werkzeughalter 22 anstatt eines Werkzeugs einen Messtaster 224. Beim Werkzeughalter 170 ist die Drehorientierungskontur 190 verbaut. Der Messtaster 224 kann die Drehorientierungskontur 190 antasten, um deren Drehorientierung zu ermitteln. Auf diese Weise kann eine Mehrzahl oder Vielzahl von Werkstücken 60 unter Nutzung der Drehorientierungskontur 190 durch die Spannvorrichtung 150 aufgenommen und mit hoher Genauigkeit hinsichtlich der Drehorientierung bearbeitet werden.

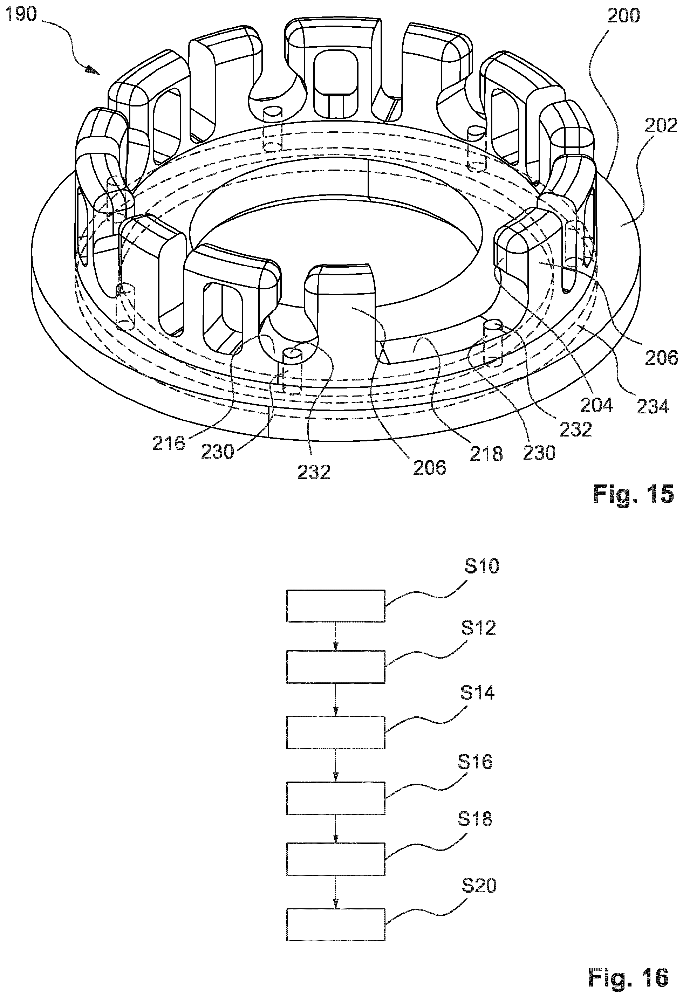

Fig. 15 veranschaulicht anhand einer perspektivischen Darstellung eine weitere Ausgestaltung einer Drehorientierungskontur 190. Hinsichtlich der allgemeinen Gestaltung der Drehorientierungskontur 190 wird Bezug auf Fig. 6 und Fig. 7 genommen. Ergänzend zeigt Fig. 15 Strömungskanäle 230, die in die Drehorientierungskontur 190 integriert sind. Mündungen 232 der Strömungskanäle 230 sind jeweils in einer der Lücken 216, 218 angeordnet. Die Mündungen 232 sind im Ausführungsbeispiel jeweils einem Drehanschlag 204 eines entsprechenden Zahns 206 benachbart. Auf diese Weise kann ein Fluid (üblicherweise Blasluft) in Richtung auf die dort angeordneten Schaufeln (vergleiche Bezugszeichen 286 in Fig. 5) geblasen werden, um Späne und sonstige Verschmutzungen vom Werkstück 60 und der Drehorientierungskontur 190 wegzublasen.

Die Strömungskanäle 230 können in die Drehorientierungskontur 190 bzw. in deren Kronengestalt integriert sein. Auf diese Weise können die Strömungskanäle 230 günstig an das jeweilige Werkstück 60 angepasst sein. Im Ausführungsbeispiel erfolgt die Versorgung der Strömungskanäle 230 über einen zentralen Ringkanal 234. Der Ringkanal 234 ist beispielsweise in die Basis 204 integriert. Der Ringkanal 204 kann jedoch auch anderweitig an die Drehorientierungskontur 190 angekoppelt sein.

Fig. 16 veranschaulicht anhand eines schematischen Blockdiagramms eine beispielhafte Ausgestaltung eines Verfahrens zur Herstellung eines Werkstücks, insbesondere zur Herstellung eines Impellers, Verdichterrades oder dergleichen. Das Verfahren startet im Ausführungsbeispiel bei einem Schritt S10. Der Schritt S10 umfasst die Bereitstellung einer ersten Spannvorrichtung zur Bearbeitung einer ersten Seite des Werkstücks sowie das Einspannen des Werkstücks in die erste Spannvorrichtung. Die Spannvorrichtung wird beispielhaft in einer ersten Werkzeugmaschine bereitgestellt. In einem Schritt S12 erfolgt die Bearbeitung der ersten Seite des Werkstücks in dessen Spannstellung in der ersten Spannvorrichtung.

Es folgt ein Schritt S14, der die Bereitstellung einer zweiten Spannvorrichtung beinhaltet. Die zweite Spannvorrichtung kann in einer zweiten Werkzeugmaschine bereitgestellt werden. Es ist jedoch auch vorstellbar, in ein und derselben Werkzeugmaschine die erste Spannvorrichtung und die zweite Spannvorrichtung bereitzustellen. Ein Schritt S16 umfasst die Bestimmung einer aktuellen Drehorientierung der zweiten Spannvorrichtung bzw. eines darin aufgenommenen Werkstücks (Referenzteil). Ein nachfolgender Schritt S18 umfasst eine rechentechnische Achskorrektur zur Berücksichtigung der gegebenen Drehorientierung.

Im Ausführungsbeispiel umfasst einer der Schritte S14 oder S16 das Einspannen des Werkstücks in die zweite Spannvorrichtung. Die zeitliche Einordnung des Einspannvorgangs ist davon abhängig, ob die Ermittlung der aktuellen Drehorientierung durch (optisches oder taktisches) Antasten der Drehorientierungskontur oder des Werkstücks selbst erfolgt.

Es folgt ein Schritt S20, der die Bearbeitung der zweiten Seite des Werkstücks in dessen Spannstellung in der zweiten Spannvorrichtung umfasst. Die Bearbeitung der zweiten Seite erfolgt in günstiger und genauer Drehorientierung in Bezug auf die im Schritt S12 geschaffene Konturen der ersten Seite des Werkstücks. Grundsätzlich können nun weitere Werkstücke sowohl auf der ersten Seite als auf der zweiten Seite bearbeitet werden, ohne dass die Schritte S16 und S18 erneut zu durchlaufen sind. Die Drehorientierungskontur sorgt dafür, dass neue Werkstücke für die Bearbeitung der zweiten Seite präzise und wiederholgenau in der zweiten Spannvorrichtung ausgerichtet werden. Nach erfolgter Achskorrektur ist diese Orientierung in der Steuerung der Werkzeugmaschine hinterlegt.

## Patentansprüche

1. Spannvorrichtung (150) zur Aufnahme eines spanend zu bearbeitenden Werkstücks (60, 260), insbesondere zur Bearbeitung eines beidseitig zu bearbeitenden Impellers (62, 262), die Folgendes aufweist:
- einen rotatorisch um eine Längsachse (174) antreibbaren Werkstückhalter (170) mit einer Werkstückauflage (172),
- einen Niederhalter (154), der zumindest in einer Spannstellung der Werkstückauflage (172) gegenüberliegt, um ein mit einer Zentrierausnehmung (76, 276) versehenes Werkstück (60, 260) konzentrisch zur Längsachse (174) zwischen der Werkstückauflage (172) und dem Niederhalter (154) einzuspannen, und
- eine Drehorientierungskontur (190, 390), die bei der Werkstückauflage (172) angeordnet ist und zumindest einen Drehanschlag (204, 404) für einen Orientierungsabschnitt (92, 292) des Werkstücks (60, 260) zur Drehausrichtung des Werkstücks (60, 260) in der Spannstellung bereitstellt,
**dadurch gekennzeichnet, dass** die Drehorientierungskontur (190, 390) eine die Längsachse (174) umgebende Krone (200, 400) umfasst, und dass der zumindest eine Drehanschlag (204, 404) bei einem Zahn (206, 406) der Krone (200, 400) ausgebildet ist.

2. Spannvorrichtung (150) nach Anspruch 1,
wobei die Drehorientierungskontur (190, 390) eine Mehrzahl von Drehanschlägen (204, 404) aufweist, die um die Längsachse (174) verteilt sind, und/oder
wobei die Krone (200, 400) am Werkstückhalter (170) auswechselbar befestigt ist.

3. Spannvorrichtung (150) nach Anspruch 1 oder 2,
wobei die Krone (200, 400) eine Mehrzahl von Zähnen (206, 406) mit Drehanschlägen (204, 404) aufweist, die um die Längsachse (174) verteilt sind, und wobei zwischen zumindest zwei Zähnen (206, 406) eine Lücke (218, 418) für einen Messtaster (224) ausgebildet ist.

4. Spannvorrichtung (150) nach einem der Ansprüche 1-3,
wobei zumindest einem Zahn (206, 406) der Krone (200, 400) ein insbesondere nachgiebig gestalteter Stützsteg (210, 410) benachbart ist, wobei zwischen dem Drehanschlag (204, 404) des Zahns (206, 406) und dem Stützsteg (210, 410) eine Lücke (216, 416) ausgebildet ist, in die in der Spannstellung eine Schaufel (86, 286) des Werkstücks (60, 260) eingerückt ist, wobei die Schaufel (86, 286) mit einer Kante (94, 294) den Drehanschlag (204, 404) kontaktiert, und wobei der Stützsteg (210, 410) zur Unterstützung der Schaufel (86, 286) an einem von der Kante (94, 294) beabstandeten Stützbereich (96, 296) ausgebildet ist.

5. Spannvorrichtung (150) nach einem der Ansprüche 1-4,
wobei die Drehorientierungskontur (190, 390) aus einem Kunststoffwerkstoff oder aus einem aluminiumbasierten Werkstoff gefertigt ist.

6. Spannvorrichtung (150) nach einem der Ansprüche 1-5,
wobei der Werkstückhalter (170) einen Zentrierdorn (180) trägt, der in der Spannstellung in die Zentrierausnehmung (76, 276) des Werkstücks (60, 260) hineinragt.

7. Spannvorrichtung (150) nach Anspruch 6,
wobei der Zentrierdorn (180) das Werkstück (60, 260) in einem Zentrierbereich (182) der Zentrierausnehmung (76, 276) zentriert, wobei der Zentrierbereich (182) des Werkstücks (60, 260) in der Spannstellung der Werkstückauflage (172) benachbart ist, und/oder
wobei der Zentrierdorn (180) eine stirnseitige Auflagefläche (184) aufweist, die insbesondere mit einer reibungserhöhenden Beschichtung versehen ist, insbesondere einer Diamantbeschichtung.

8. Kombination aus einer Spannvorrichtung (150) nach einem der Ansprüche 1-7 und einem zu Bearbeitungszwecken daran aufgenommenen Werkstück (60, 260).

9. Kombination nach Anspruch 8,
wobei der zumindest eine Drehanschlag (204, 404) zur Drehausrichtung des Werkstücks (60, 260) an eine Schaufel (86, 286) des Werkstücks (60, 260) angepasst ist, und wobei insbesondere der zumindest eine Drehanschlag (204, 404) an eine Kante (94, 294) der Schaufel (86, 286) angepasst ist.

10. Kombination nach Anspruch 8 oder 9,
wobei der zumindest eine Drehanschlag (204, 404) an einen in einer anderen Aufspannung erzeugten Orientierungsabschnitt (92, 292) des Werkstücks (60, 260) angepasst ist.

11. Kombination nach einem der Ansprüche 8-10,
wobei der Niederhalter (154) in der Spannstellung axial auf eine Nabe (72, 272) des Werkstücks (60, 260) einwirkt, insbesondere auf eine Stirn (82, 282) der Nabe (72, 272), und/oder
wobei zumindest ein Strömungskanal (230) für Blasluft **in** der Drehorientierungskontur (190, 390) ausgebildet ist, und wobei vorzugsweise eine Mehrzahl von Mündungen (232) vorgesehen ist, die in der Spannstellung auf das Werkstück (60, 260) gerichtet sind.

12. Werkzeugmaschine (10) mit einem Gestell (12), zumindest einem Werkstücktisch (26) zur Aufnahme eines Werkstückhalters (170), einer Spannvorrichtung (150) nach einem der Ansprüche 1-7, mit zumindest einer Werkzeugspindel (20), die in zumindest vier oder fünf Achsen relativ zur Werkstückauflage (172) der Spannvorrichtung (150) verfahrbar ist, und vorzugsweise mit einer Messeinrichtung (222) mit zumindest einem Messtaster (224), der dazu ausgebildet ist, zu Zwecken einer Achskorrektur zumindest eine Drehorientierung der Drehorientierungskontur (190, 390) oder des gespannten Werkstücks (60, 260) zu ermitteln.

13. Werkzeugmaschine (10) nach Anspruch 12, wobei die Spannvorrichtung (150) eine sekundäre Spannvorrichtung (150) zum Spannen des Werkstücks (60, 260) zur Bearbeitung einer zweiten Seite (68, 268) des Werkstücks (60, 260) ist, wobei die Werkzeugmaschine (10) ferner mit einer primären Spannvorrichtung (100) zum Spannen des Werkstücks (60, 260) zur Bearbeitung einer ersten Seite (66, 266) des Werkstücks (60, 260) bestückbar ist, und wobei die Ausrichtung des Werkstücks (60, 260) in der zweiten Spannvorrichtung (150) anhand eines bei der Bearbeitung der ersten Seite (66, 266) des Werkstücks (60, 260) erzeugten Orientierungsabschnitts (92, 292) des Werkstücks (60, 260) erfolgt.

14. Fertigungsanlage (500) zur Bearbeitung, die Folgendes aufweist:
- zumindest eine Werkzeugmaschine (10) mit einem Gestell (12), zumindest einem Werkstücktisch (26) zur Aufnahme eines Werkstückhalters (170) und mit zumindest einer Werkzeugspindel (20),
- zumindest eine am Werkstücktisch (26) montierbare primäre Spannvorrichtung (100) zur Bearbeitung einer ersten Seite (66, 266) eines Werkstücks (60, 260),
- zumindest eine Spannvorrichtung (150) nach einem der Ansprüche 1-7, die als am Werkstücktisch (26) montierbare sekundäre Spannvorrichtung (150) zur Bearbeitung einer zweiten Seite (68, 268) des Werkstücks (60, 260) ausgebildet ist,
wobei der Orientierungsabschnitt (92, 292) des Werkstücks (60, 260) durch die Bearbeitung der ersten Seite (66, 266) des Werkstücks (60, 260) erzeugt ist.

15. Verfahren zur Herstellung eines Werkstücks (60, 260), mit den folgenden Schritten:
- Bearbeitung einer ersten Seite (66, 266) des Werkstücks (60, 260) mit einer Werkzeugmaschine (10), wobei das Werkstück (60, 260) durch eine primäre Spannvorrichtung (100) gespannt ist,
- Bereitstellung einer sekundären Spannvorrichtung (150), die nach einem der Ansprüche 1-7 gestaltet ist,
- Ermittlung einer Drehorientierung der Drehorientierungskontur (190, 390) der sekundären Spannvorrichtung (150), insbesondere mit einem Messtaster (224),
- Durchführung einer rechentechnischen Achskorrektur auf Basis der erfassten Drehorientierung, und
- Bearbeitung einer zweiten Seite (68, 268) des Werkstücks (60, 260), die der ersten Seite (66, 266) gegenüberliegt, mit einer Werkzeugmaschine (10), wobei das Werkstück (60, 260) durch die sekundäre Spannvorrichtung (150) gespannt ist.

## Claims

1. Clamping device (150) for receiving a workpiece (60, 260) to be machined by material removal, in particular for machining an impeller (62, 262) to be machined on both sides, comprising:
- a workpiece holder (170) drivable rotatably about a longitudinal axis (174) and having a workpiece support (172),
- a downholder (154) which, at least in a clamping position, faces the workpiece support (172) in order to clamp a workpiece (60, 260) that is provided with a centering recess (76, 276) concentrically with respect to the longitudinal axis (174) between the workpiece support (172) and the downholder (154), and
- a rotational orientation contour (190, 390) which is arranged at the workpiece support (172) and provides at least one rotation stop (204, 404) for an orientation section (92, 292) of the workpiece (60, 260) for rotational alignment of the workpiece (60, 260) in the clamping position,
**characterized in that** the rotational orientation contour (190, 390) comprises a crown (200, 400) surrounding the longitudinal axis (174), and that the at least one rotation stop (204, 404) is formed on a tooth (206, 406) of the crown (200, 400).

2. Clamping device (150) according to claim 1,
wherein the rotational orientation contour (190, 390) comprises a plurality of rotation stops (204, 404) distributed about the longitudinal axis (174), and/or wherein the crown (200, 400) is removably fastened to the workpiece holder (170).

3. Clamping device (150) according to claim 1 or 2,
wherein the crown (200, 400) comprises a plurality of teeth (206, 406) with rotation stops (204, 404) distributed about the longitudinal axis (174), and wherein a gap (218, 418) for a measuring probe (224) is formed between at least two teeth (206, 406).

4. Clamping device (150) according to any one of claims 1 to 3,
wherein at least one tooth (206, 406) of the crown (200, 400) is adjacent to a support web (210, 410) that is particularly configured to be resilient, wherein a gap (216, 416) is formed between the rotation stop (204, 404) of the tooth (206, 406) and the support web (210, 410), into which, in the clamping position, a blade (86, 286) of the workpiece (60, 260) is inserted, wherein the blade (86, 286) contacts the rotation stop (204, 404) with an edge (94, 294), and wherein the support web (210, 410) is formed to support the blade (86, 286) at a support region (96, 296) spaced apart from the edge (94, 294).

5. Clamping device (150) according to any one of claims 1 to 4,
wherein the rotational orientation contour (190, 390) is made of a plastic material or an aluminum-based material.

6. Clamping device (150) according to any one of claims 1 to 5,
wherein the workpiece holder (170) carries a centering pin (180) which, in the clamping position, projects into the centering recess (76, 276) of the workpiece (60, 260).

7. Clamping device (150) according to claim 6,
wherein the centering pin (180) centers the workpiece (60, 260) in a centering region (182) of the centering recess (76, 276), with the centering region (182) of the workpiece (60, 260) being adjacent to the workpiece support (172) in the clamping position, and/or
wherein the centering pin (180) has an end face support surface (184) that is particularly provided with a friction-increasing coating, in particular a diamond coating.

8. Combination of a clamping device (150) according to any one of claims 1 to 7 and a workpiece (60, 260) received thereon for machining purposes.

9. Combination according to claim 8,
wherein the at least one rotation stop (204, 404) for rotational alignment of the workpiece (60, 260) is adapted to a blade (86, 286) of the workpiece (60, 260), and
wherein in particular the at least one rotation stop (204, 404) is adapted to an edge (94, 294) of the blade (86, 286).

10. Combination according to claim 8 or 9,
wherein the at least one rotation stop (204, 404) is adapted to an orientation section (92, 292) of the workpiece (60, 260) produced in another clamping operation.

11. Combination according to any one of claims 8 to 10,
wherein the downholder (154) acts axially on a hub (72, 272) of the workpiece (60, 260) in the clamping position, in particular on an end face (82, 282) of the hub (72, 272), and/or
wherein at least one flow channel (230) for blow-off air is formed in the rotational orientation contour (190, 390), and preferably a plurality of outlets (232) are provided which, in the clamping position, are directed toward the workpiece (60, 260).

12. Machine tool (10) comprising a frame (12), at least one workpiece table (26) for receiving a workpiece holder (170), a clamping device (150) according to any one of claims 1 to 7, at least one tool spindle (20) movable in at least four or five axes relative to the workpiece support (172) of the clamping device (150), and preferably a measuring device (222) with at least one measuring probe (224) configured to determine, for axis correction purposes, at least one rotational orientation of the rotational orientation contour (190, 390) or of the clamped workpiece (60, 260).

13. Machine tool (10) according to claim 12, wherein the clamping device (150) is a secondary clamping device (150) for clamping the workpiece (60, 260) for machining a second side (68, 268) of the workpiece (60, 260), wherein the machine tool (10) is further equipable with a primary clamping device (100) for clamping the workpiece (60, 260) for machining a first side (66, 266) of the workpiece (60, 260), and wherein the alignment of the workpiece (60, 260) in the secondary clamping device (150) is based on an orientation section (92, 292) of the workpiece (60, 260) produced during machining of the first side (66, 266).

14. Manufacturing system (500) for machining, comprising:
- at least one machine tool (10) having a frame (12), at least one workpiece table (26) for receiving a workpiece holder (170), and at least one tool spindle (20),
- at least one primary clamping device (100) mountable on the workpiece table (26) for machining a first side (66, 266) of a workpiece (60, 260),
- at least one clamping device (150) according to any one of claims 1 to 7, configured as a secondary clamping device (150) mountable on the workpiece table (26) for machining a second side (68, 268) of the workpiece (60, 260),
wherein the orientation section (92, 292) of the workpiece (60, 260) is produced by machining the first side (66, 266) of the workpiece (60, 260).

15. Method for manufacturing a workpiece (60, 260), comprising the steps of:
- machining a first side (66, 266) of the workpiece (60, 260) with a machine tool (10), the workpiece (60, 260) being clamped by a primary clamping device (100),
- providing a secondary clamping device (150) configured according to any one of claims 1 to 7,
- determining a rotational orientation of the rotational orientation contour (190, 390) of the secondary clamping device (150), in particular with a measuring probe (224),
- performing a computational axis correction based on the detected rotational orientation, and
- machining a second side (68, 268) of the workpiece (60, 260) opposite the first side (66, 266) with a machine tool (10), with the workpiece (60, 260) being clamped by the secondary clamping device (150).

## Revendications

1. Dispositif de serrage (150) pour la réception d'une pièce (60, 260) à usiner par enlèvement de matière, en particulier pour l'usinage d'une roue à ailettes (62, 262) à usiner des deux côtés, présentant ce qui suit :
- un porte-pièce (170) pouvant être entraîné en rotation autour d'un axe longitudinal (174) et comportant un support pour pièce (172),
- un serre-flan (154) qui, au moins dans une position de serrage, fait face au support pour pièce (172), afin de serrer une pièce (60, 260) pourvue d'un évidement de centrage (76, 276), concentriquement à l'axe longitudinal (174), entre le support pour pièce (172) et le serre-flan (154), et
- un contour d'orientation en rotation (190, 390) disposé au niveau du support pour pièce (172) et fournissant au moins une butée de rotation (204, 404) pour une section d'orientation (92, 292) de la pièce (60, 260) par rapport au sens de rotation de la pièce (60, 260) dans la position de serrage,
**caractérisé en ce que** le contour d'orientation en rotation (190, 390) comprend une couronne (200, 400) entourant l'axe longitudinal (174), et **en ce que** l'au moins une butée de rotation (204, 404) est réalisée au niveau d'une dent (206, 406) de la couronne (200, 400).

2. Dispositif de serrage (150) selon la revendication 1,
dans lequel le contour d'orientation en rotation (190, 390) présente une pluralité de butées de rotation (204, 404) réparties autour de l'axe longitudinal (174), et/ou dans lequel la couronne (200, 400) est fixée de manière interchangeable au porte-pièce (170).

3. Dispositif de serrage (150) selon la revendication 1 ou 2,
dans lequel la couronne (200, 400) présente une pluralité de dents (206, 406) comportant des butées de rotation (204, 404) réparties autour de l'axe longitudinal (174), et dans lequel un interstice (218, 418) est réalisé entre au moins deux dents (206, 406) pour un palpeur de mesure (224).

4. Dispositif de serrage (150) selon l'une des revendications 1 à 3,
dans lequel au moins une dent (206, 406) de la couronne (200, 400) est adjacente à une entretoise d'appui (210, 410), en particulier conçue de manière souple, dans lequel est réalisé entre la butée de rotation (204, 404) de la dent (206, 406) et l'entretoise d'appui (210, 410) un interstice (216, 416) dans lequel, dans la position de serrage, une ailette (86, 286) de la pièce (60, 260) est insérée, dans lequel l'ailette (86, 286) est en contact avec la butée de rotation (204, 404) par un bord (94, 294), et dans lequel l'entretoise d'appui (210, 410) est réalisée pour soutenir l'ailette (86, 286) sur une zone d'appui (96, 296) espacée du bord (94, 294).

5. Dispositif de serrage (150) selon l'une des revendications 1 à 4,
dans lequel le contour d'orientation en rotation (190, 390) est fabriqué à partir d'un matériau en matière plastique ou d'un matériau à base d'aluminium.

6. Dispositif de serrage (150) selon l'une des revendications 1 à 5,
dans lequel le porte-pièce (170) porte un mandrin de centrage (180) qui, dans la position de serrage, pénètre dans l'évidement de centrage (76, 276) de la pièce (60, 260).

7. Dispositif de serrage (150) selon la revendication 6,
dans lequel le mandrin de centrage (180) centre la pièce (60, 260) dans une zone de centrage (182) de l'évidement de centrage (76, 276), dans lequel la zone de centrage (182) de la pièce (60, 260) est adjacente au support pour pièce (172) dans la position de serrage, et/ou
dans lequel le mandrin de centrage (180) présente une surface d'appui (184) côté frontal qui est en particulier pourvue d'un revêtement augmentant le frottement, en particulier d'un revêtement en diamant.

8. Combinaison d'un dispositif de serrage (150) selon l'une des revendications 1 à 7 et d'une pièce (60, 260) reçue sur celui-ci à des fins d'usinage.

9. Combinaison selon la revendication 8,
dans laquelle l'au moins une butée de rotation (204, 404) est adaptée à une ailette (86, 286) de la pièce (60, 260) par rapport au sens de rotation de la pièce (60, 260), et dans laquelle l'au moins une butée de rotation (204, 404) est en particulier adaptée à un bord (94, 294) de l'ailette (86, 286).

10. Combinaison selon la revendication 8 ou 9,
dans laquelle l'au moins une butée de rotation (204, 404) est adaptée à une section d'orientation (92, 292) de la pièce (60, 260) produite dans un autre serrage.

11. Combinaison selon l'une des revendications 8 à 10,
dans laquelle le serre-flan (154) agit axialement sur un moyeu (72, 272) de la pièce (60, 260) dans la position de serrage, en particulier sur un front (82, 282) du moyeu (72, 272), et/ou
dans laquelle au moins un canal d'écoulement (230) pour de l'air de soufflage est réalisé dans le contour d'orientation en rotation (190, 390), et dans laquelle de préférence une pluralité d'embouchures (232) sont prévues, lesquelles sont dirigées vers la pièce (60, 260) dans la position de serrage.

12. Machine-outil (10) comportant un châssis (12), au moins une table porte-pièce (26) pour la réception d'un porte-pièce (170), un dispositif de serrage (150) selon l'une des revendications 1 à 7, comportant au moins une broche porte-outil (20) pouvant être déplacée selon au moins quatre ou cinq axes par rapport au support pour pièce (172) du dispositif de serrage (150), et de préférence comportant un appareil de mesure (222) comportant au moins un palpeur de mesure (224) réalisé pour déterminer au moins une orientation en rotation du contour d'orientation en rotation (190, 390) ou de la pièce (60, 260) serrée à des fins de correction d'axe.

13. Machine-outil (10) selon la revendication 12, dans laquelle le dispositif de serrage (150) est un dispositif de serrage secondaire (150) pour le serrage de la pièce (60, 260) pour l'usinage d'un second côté (68, 268) de la pièce (60, 260), dans laquelle la machine-outil (10) peut en outre être équipée d'un dispositif de serrage primaire (100) pour le serrage de la pièce (60, 260) pour l'usinage d'un premier côté (66, 266) de la pièce (60, 260), et dans laquelle l'orientation de la pièce (60, 260) dans le second dispositif de serrage (150) est effectuée à l'aide d'une section d'orientation (92, 292) de la pièce (60, 260), laquelle section d'orientation est produite lors de l'usinage du premier côté (66, 266) de la pièce (60, 260).

14. Installation de fabrication (500) pour l'usinage, présentant ce qui suit :
- au moins une machine-outil (10) comportant un châssis (12), au moins une table porte-pièce (26) pour la réception d'un porte-pièce (170) et comportant au moins une broche porte-outil (20),
- au moins un dispositif de serrage primaire (100) pouvant être monté sur la table porte-pièce (26) pour l'usinage d'un premier côté (66, 266) d'une pièce (60, 260),
- au moins un dispositif de serrage (150) selon l'une des revendications 1 à 7, lequel est réalisé sous forme de dispositif de serrage secondaire (150) pouvant être monté sur la table porte-pièce (26) pour l'usinage d'un second côté (68, 268) de la pièce (60, 260), dans laquelle la section d'orientation (92, 292) de la pièce (60, 260) est produite par l'usinage du premier côté (66, 266) de la pièce (60, 260).

15. Procédé pour la fabrication d'une pièce (60, 260), comportant les étapes suivantes :
- usinage d'un premier côté (66, 266) de la pièce (60, 260) avec une machine-outil (10), dans lequel la pièce (60, 260) est serrée par un dispositif de serrage primaire (100),
- fourniture d'un dispositif de serrage secondaire (150) conçu selon l'une des revendications 1 à 7,
- détermination d'une orientation en rotation du contour d'orientation en rotation (190, 390) du dispositif de serrage secondaire (150), en particulier avec un palpeur de mesure (224),
- exécution d'une correction d'axe par calcul sur la base de l'orientation en rotation détectée, et
- usinage d'un second côté (68, 268) de la pièce (60, 260), lequel est opposé au premier côté (66, 266), avec une machine-outil (10), dans lequel la pièce (60, 260) est serrée par le dispositif de serrage secondaire (150).
